(19) Europäisches Patentamt
European Patent Office
Office européen des brevets

(11) **EP 3 869 161 B1**

(12) **EUROPÄISCHE PATENTSCHRIFT**

(45) Veröffentlichungstag und Bekanntmachung des Hinweises auf die Patenterteilung:
**21.12.2022 Patentblatt 2022/51**

(21) Anmeldenummer: **21154843.3**

(22) Anmeldetag: **02.02.2021**

(51) Internationale Patentklassifikation (IPC):
**G01D 5/38** (2006.01)       **G01B 9/00** (2006.01)
**G01B 11/00** (2006.01)

(52) Gemeinsame Patentklassifikation (CPC):
**G01D 5/38**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2020 DE 102020202080**

(43) Veröffentlichungstag der Anmeldung:
**25.08.2021 Patentblatt 2021/34**

(73) Patentinhaber: **Dr. Johannes Heidenhain GmbH 83301 Traunreut (DE)**

(72) Erfinder:
• **KÄLBERER, Thomas**
**86529 Schrobenhausen (DE)**
• **HOLZAPFEL, Wolfgang**
**83119 Obing (DE)**

(56) Entgegenhaltungen:
EP-A2- 1 762 828          EP-A2- 2 450 673
EP-B1- 1 762 828          EP-B1- 2 450 673
DE-A1-102015 203 188    DE-A1-102016 210 434
DE-A1-102017 219 125

**Beschreibung**

GEBIET DER TECHNIK

Die vorliegende Erfindung betrifft eine optische Positionsmesseinrichtung, die zur hochgenauen Positionsmessung von zwei zueinander entlang mindestens zweier Messrichtungen beweglicher Objekte geeignet ist. Die beiden Objekte sind hierbei jeweils mit Maßstäben verbunden.

STAND DER TECHNIK

Es sind optische Positionsmesseinrichtungen basierend auf interferentiellen Abtastprinzipien bekannt, in denen an einer Messteilung eines Maßstabs ein Beleuchtungsstrahlenbündel durch Beugung in unterschiedliche Teilstrahlenbündel aufspalten wird. Nach der Vereinigung geeigneter Teilstrahlenbündel ergeben sich bei einer Verschiebung des Maßstabs gegenüber einem anderen Maßstab durch die Interferenz der beiden Teilstrahlenbündel periodische Signale in einer Detektionseinheit. Durch das Zählen der Signalperioden in der Detektionseinheit kann auf das Ausmaß der Verschiebung der beiden Maßstäbe bzw. der mit den Maßstäben verbundenen Objekte geschlossen werden.

Derartige optische Positionsmesseinrichtungen werden z.B. für hochgenaue Positionsmessungen in der Halbleiterindustrie eingesetzt, wo etwa Belichtungsmasken für die Photolithographie relativ zu einem Wafer mit Geschwindigkeiten von mehr als einem Meter pro Sekunde bewegt werden; dabei müssen Positioniergenauigkeiten im Bereich weniger Nanometer und darunter eingehalten werden. Ein maßgeblicher Vorteil gitterbasierter Positionsmesseinrichtungen gegenüber Interferometern besteht darin, dass die interferierenden Teilstrahlenbündel nur sehr kurze Wege zurücklegen müssen. Damit werden diese kaum durch Umwelteinflüsse wie Luftdruck-, Temperatur- und Feuchtigkeitsschwankungen beeinträchtigt, die z.B. über einen schwankenden Brechungsindex der Luft die Messung verfälschen könnten.

Aus der WO 2008/138501 A1 ist eine optische Positionsmesseinrichtung bekannt, die zwei gekreuzte Maßstäbe umfasst, die jeweils Messteilungen mit periodisch angeordneten Strichen bzw. Gitterbereichen quer zur gemeinsamen Messrichtung aufweisen. Mittels einer solchen Positionsmesseinrichtung lässt sich die Position eines in zwei Richtungen beweglichen Tisches entlang einer ersten Messrichtung x erfassen, unabhängig von der Position des Tisches entlang einer anderen, zweiten Messrichtung y. Verwendet man zwei solcher Positionsmesseinrichtungen, die orthogonal zueinander angeordnet sind, so lässt sich die Position des Tisches auch entlang der zweiten Messrichtung y erfassen, diesmal unabhängig von der Position des Tisches entlang der ersten Messrichtung x. Nachteilig an der in der WO 2008/138501 A1 offenbarten Positionsmesseinrichtung ist, dass sich Bewegungen des Tisches senkrecht zur Tischebene bzw. horizontalen Bewegungsebene entlang einer weiteren, dritten Messrichtung z nicht messtechnisch bestimmen lassen.

Um die Position eines Tisches in der Tischebene entlang der ersten und zweiten Messrichtungen x, y zu erfassen, sind auch Positionsmesseinrichtungen mit Maßstäben bekannt, die zweidimensionale Messteilungen in Form von Kreuzgittern aufweisen, welche an mehreren Stellen abgetastet werden, so dass laterale Verschiebungen als auch Drehungen in der Tischebene messtechnisch erfassbar sind. In der EP 1 019 669 B1 wird bezüglich derartiger Positionsmesseinrichtungen vorgeschlagen, zusätzliche Abstandssensoren zu verwenden, mit denen auch Bewegungen senkrecht zur Tischebene, also entlang der dritten Messrichtung z und damit alle sechs Bewegungs-Freiheitsgrade des Tisches erfasst werden können. Die hierbei vorgesehenen Abstandsensoren, wie z.B. berührende oder kapazitive Messtaster, erfüllen aber nicht die Genauigkeitsanforderungen aktueller und zukünftiger Fertigungsanlagen in der Halbleiterindustrie. Hinzu kommt, dass hochgenaue, ausgedehnte Kreuzgitter aufwändig herzustellen sind.

In der EP 1 762 828 A2 ist eine optische Positionsmesseinrichtung beschrieben, die neben einer Messung entlang einer primären, horizontalen Messrichtung x zusätzlich eine Messung des sogenannten Abtastabstandes senkrecht zur Messrichtung x erlaubt, also eine Positionsmessung entlang der Messrichtung z zwischen einem Maßstab und einer Abtasteinheit mit weiteren Komponenten der Positionsmesseinrichtung. Dies ist gleichbedeutend mit der Messung eines zusätzlichen Bewegungsfreiheitsgrades entlang der vertikalen Messrichtung z. Hierzu fällt ein Lichtstrahl durch eine transparente Abtastplatte mit verschiedenen optischen Strukturen auf eine reflektierende Messteilung des Maßstabs. Das in zwei Teilstrahlenbündel aufgespaltene Licht wandert anschließend mehrmals zwischen der Abtastplatte und dem Maßstab hin und her. Die Teilstrahlen eines Teilstrahlenbündels verlaufen dabei bezüglich einer Ebene senkrecht zur horizontalen Messrichtung x asymmetrisch und weisen unterschiedliche Weglängen auf. Im Verlauf des Abtaststrahlengangs wechselwirken die Teilstrahlenbündel mit unterschiedlichen optisch wirksamen Strukturen, wie zum Beispiel mit Gittern zum Aufspalten oder Vereinigen von Lichtstrahlen unterschiedlicher Beugungsordnungen sowie mit Spiegeln zum Reflektieren und Linsen zum gezielten Ablenken von Licht. Letztlich werden solche Teilstrahlenbündel miteinander vereinigt, die miteinander interferieren und so bei einer Relativbewegung zwischen Maßstab und Abtasteinheit periodische Abtastsignale in mehreren Fotodetektoren einer Detektionseinheit erzeugen. Wegen des asymmetrischen Verlaufs der Teilstrahlenbündel erhält man in der Detektionseinheit periodische Abtastsignale, denen man sowohl die horizontale als auch die vertikale Verschiebung von Maßstab und Abtasteinheit entnehmen kann, und damit die Relativ-Verschiebung der beiden zueinander beweglichen Objekte entlang der beiden Messrichtungen x und z. Aufgrund der Struktur der Abtastplatte der in der EP 1 762 828 A2 beschriebenen Positionsmesseinrichtung kann diese jedoch nicht für Systeme mit gekreuzten Maßstäben verwendet werden, wie sie vorstehend beschrieben sind. Die Abtastplatte lässt sich nicht zu einem zweiten Maßstab ausdehnen, relativ zu dem sich der erste Maßstab quer zur Messrichtung bewegen könnte, ohne die Messung zu stören.

Deshalb wurde in der EP 2 450 673 A2 eine optische Positionsmesseinrichtung vorgeschlagen, die einen Abtaststab mit einer ersten gitterförmigen Messteilung und einen Maßstab mit einer zweiten gitterförmigen Messteilung umfasst, wobei der Abtaststab in eine erste oder zweite von zwei Messrichtungen x, y und der Maßstab in die jeweils andere der beiden Messrichtungen erstreckt y, x ist. Der Maßstab ist dabei in einer dritten Messrichtung z senkrecht zur ersten und zweiten Messrichtung um einen Abtastabstand zum Abtaststab versetzt angeordnet. Die optische Positionsmesseinrichtung weist ferner eine Lichtquelle auf, die ein Beleuchtungsstrahlenbündel emittiert, welches die erste Messteilung auf dem Abtaststab an einem Kreuzungspunkt von Abtaststab und Maßstab durchstößt, um auf die zweite Messteilung auf dem Maßstab zu fallen und von dort zurück zum Abtaststab und weiter zu einer Detektionseinheit zu gelangen. Dabei wird das Licht an optisch wirksamen Strukturen von Abtaststab und Maßstab durch Beugung in unterschiedliche Teilstrahlenbündel aufgespalten und wieder vereinigt, wobei durch Interferenz von miteinander vereinigten Teilstrahlenbündeln bei einer Verschiebung zwischen Abtaststab und Maßstab entlang der ersten Messrichtung x ein periodisches Signal in der Detektionseinheit resultiert. Die optische Positionsmesseinrichtung ist hierbei so ausgebildet, dass bei einer Änderung des Abtastabstandes zwischen Abtaststab und Maßstab entlang der dritten Messrichtung z ebenfalls periodische Signale in der Detektionseinheit erzeugbar sind. Diese optische Positionsmesseinrichtung ermöglicht jetzt die Erfassung von Relativbewegungen entlang mindestens zweier Messrichtungen x, z, ist aber nicht unabhängig von eventuellen Schwankungen der Licht-Wellenlänge; derartige Schwankungen können z.B. durch Temperatur- und/oder Feuchteänderungen in der Umgebungsluft resultieren und Fehler bei der Bestimmung der positionsabhängigen Abtastsignale verursachen.

Auch die Dokumente DE 10 2016 210434 A1, DE 10 2015 203188 A1 und DE 10 2017 219125 A1 zeigen ähnliche Positionsmesseinrichtungen.

## ZUSAMMENFASSUNG DER ERFINDUNG

Der vorliegenden Erfindung liegt die Aufgabe zugrunde, eine hochgenaue optische Positionsmesseinrichtung mit gekreuzt angeordneten Maßstäben anzugeben, die neben mindestens einer Positionsmessung entlang einer Messrichtung parallel zur Längserstreckungsrichtung eines der Maßstäbe auch eine Positionsmessung entlang einer weiteren Messrichtung ermöglicht, die senkrecht zu den beiden Maßstäben orientiert ist.

Diese Aufgabe wird erfindungsgemäß durch eine optische Positionsmesseinrichtung mit den Merkmalen des Anspruchs 1 gelöst. Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung dient zur Erfassung der Relativposition zweier, entlang mehrerer Messrichtungen zueinander beweglicher Maßstäbe, die in unterschiedlichen Ebenen und gekreuzt zueinander angeordnet sind. Hierbei weisen die beiden Maßstäbe jeweils eine Messteilung mit periodisch angeordneten Gitterbereichen mit unterschiedlichen optischen Eigenschaften auf. Die Längserstreckungsrichtungen der Maßstäbe sind parallel zu einer ersten und zweiten Messrichtung orientiert, wobei durch die erste und zweite Messrichtung eine horizontale Bewegungsebene aufgespannt wird; senkrecht zur ersten und zweiten Messrichtung ist eine dritte Messrichtung orientiert. Am ersten Maßstab erfolgt eine Aufspaltung eines von einer Lichtquelle emittierten Beleuchtungsstrahlenbündels in mindestens zwei Teilstrahlenbündel. Die Teilstrahlenbündel beaufschlagen nachfolgend den zweiten Maßstab, welcher gegenüber der horizontalen Bewegungsebene um seine Längserstreckungsrichtung verkippt angeordnet ist. Dabei erfahren die Teilstrahlenbündel am zweiten Maßstab eine Rückreflexion in Richtung des ersten Maßstabs. Die zurückreflektierten Teilstrahlenbündel treffen erneut auf dem ersten Maßstab auf und werden dort wiedervereinigt, so dass anschließend ein resultierendes Signalstrahlenbündel in Richtung einer Detektionseinheit propagiert, über die mehrere phasenverschobene Abtastsignale bezüglich der Relativbewegung der Maßstäbe entlang der dritten Messrichtung sowie der ersten oder zweiten Messrichtung erzeugbar sind.

Vorzugsweise ist der zweite Maßstab gegenüber der horizontalen Bewegungsebene um seine Längserstreckungsrichtung derart verkippt angeordnet, dass in der Ebene, die durch die am ersten Maßstab aufgespalten Teilstrahlenbündel aufgespannt wird, die Winkelhalbierende zwischen den aufgespalten Teilstrahlenbündeln senkrecht auf der Verbindungslinie zwischen den Auftreffpunkten der Teilstrahlenbündel am zweiten Maßstab steht.

In einer möglichen Ausführungsform sind die beiden Messteilungen auf den Maßstäben jeweils als Reflexions-Phasengitter ausgebildet, die periodisch angeordnete Gitterbereiche mit unterschiedlichen phasenschiebenden Wirkungen aufweisen.

Dabei können die beiden Maßstäbe jeweils einen Trägerkörper umfassen, auf dem die Messteilungen angeordnet sind, wobei der Trägerkörper aus einem Material mit einem thermischen Ausdehnungskoeffizienten CTE ≈ 0 ausgebildet ist.

Ferner kann mindestens eine der beiden Messteilungen als geometrisches Phasengitter ausgebildet sein, das die beiden Teilstrahlenbündel orthogonal zueinander polarisiert.

Desweiteren ist möglich, dass die Messteilung des zweiten Maßstabs als Littrow-Gitter ausgebildet ist, so dass

- entweder die darauf einfallenden Teilstrahlenbündel eine Rückreflexion entgegengesetzt zur Einfallsrichtung erfahren,
- oder die in eine Ebene, die durch eine Normale auf die zweite Messteilung und die Beugungsrichtung der ersten Messteilung aufgespannt wird, projizierten Teilstrahlenbündel eine Rückreflexion entgegengesetzt zur Einfallsrichtung erfahren.

Mit Vorteil sind die Längserstreckungsrichtungen des ersten und zweiten Maßstabs orthogonal zueinander orientiert.

In einer möglichen Ausführungsform ist vorgesehen, dass

- der erste Maßstab entlang seiner Längserstreckungsrichtung eine Länge aufweist, die dem Verschiebeweg des ersten Maßstabs entlang seiner zugehörigen Messrichtung entspricht und
- der zweite Maßstab entlang seiner Längserstreckungsrichtung eine Länge aufweist, die dem Verschiebeweg des ersten Maßstabs entlang der zugehörigen Messrichtung entspricht.

Alternativ hierzu ist möglich, dass

- der erste Maßstab entlang seiner Längserstreckungsrichtung eine Länge aufweist, die dem Verschiebeweg des zweiten Maßstabs entlang seiner zugehörigen Messrichtung entspricht und
- der zweite Maßstab entlang seiner Längserstreckungsrichtung eine Länge aufweist, die dem Verschiebeweg des zweiten Maßstabs entlang der zugehörigen Messrichtung entspricht.

Es kann vorgesehen sein, dass die Lichtquelle und die Detektionseinheit gemeinsam in einem Abtastkopf angeordnet sind.

Dabei ist möglich, dass

- der Abtastkopf mit dem zweiten Maßstab verbunden ist, und
- der erste Maßstab entlang der ersten, zweiten und dritten Messrichtung relativ beweglich gegenüber dem Abtastkopf angeordnet ist, und
- der erste Maßstab um seine Längserstreckungsrichtung gegenüber der horizontalen Bewegungsebene verkippt angeordnet ist.

Ferner kann dabei das Signalstrahlenbündel antiparallel zum Beleuchtungsstrahlenbündel orientiert sein.

In einer weiteren Ausführungsform kann vorgesehen sein, dass

- der Abtastkopf weder mit dem ersten noch mit dem zweiten Maßstab verbunden und entlang der ersten Messrichtung beweglich gegenüber dem ersten Maßstab angeordnet ist, und
- der zweite Maßstab entlang der zweiten und dritten Messrichtung relativ beweglich gegenüber dem ersten Maßstab angeordnet ist.

Ferner ist möglich, dass

- der Abtastkopf mit dem ersten Maßstab verbunden ist, und
- der zweite Maßstab entlang der ersten, zweiten und dritten Messrichtung (x, y, z) relativ beweglich gegenüber dem Abtastkopf angeordnet ist.

Alternativ hierzu kann desweiteren vorgesehen sein, dass

- der Abtastkopf weder mit dem ersten noch mit dem zweiten Maßstab verbunden und entlang der ersten Messrichtung beweglich gegenüber dem zweiten Maßstab angeordnet ist, und
- der erste Maßstab entlang der zweiten und dritten Messrichtung relativ beweglich gegenüber dem zweiten Maßstab angeordnet ist.

Es ist schließlich möglich, dass eine Fertigungseinrichtung mit vier erfindungsgemäßen Positionsmesseinrichtungen ausgebildet wird, wobei

- die Fertigungseinrichtung ein Werkzeug sowie einen Tisch umfasst, der entlang der drei Messrichtungen gegenüber dem Werkzeug beweglich angeordnet ist, und
- die Abtastköpfe sowie der zweite Maßstab der Positionsmesseinrichtungen jeweils mit dem Werkzeug verbunden sind, und
- der erste Maßstab der Positionsmesseinrichtungen jeweils mit dem Tisch verbunden ist,
- so dass aus den Abtastsignalen der Positionsmesseinrichtungen die räumliche Position des Tisches gegenüber dem Werkzeug in allen sechs räumlichen Freiheitsgraden bestimmbar ist.

Über die erfindungsgemäßen Maßnahmen kann nunmehr in einer optischen Positionsmesseinrichtung mit gekreuzten Maßstäben auch eine hochgenaue Positionsmessung entlang einer weiteren Messrichtung erfolgen, die senkrecht zu den beiden Maßstäben orientiert ist. Damit lässt sich beispielsweise die Bewegung eines Tisches in einer Fertigungseinrichtung zur Halbleiterherstellung in allen sechs Bewegungs-Freiheitsgraden messtechnisch erfassen.

Die Positionsmessung ist in einer vorteilhaften Ausführungsform zudem unabhängig von eventuellen Schwankungen der Lichtwellenlänge, die etwa durch eine veränderte Lufttemperatur oder Luftfeuchte verursacht werden können. Damit sinken die Anforderungen an die zu verwendende Lichtquelle hinsichtlich Kohärenzeigenschaften und Driftverhalten, d.h. es ist der Einsatz kostengünstiger Lichtquellen möglich.

Darüber hinaus kann die Anzahl und Masse der erforderlichen Komponenten der Positionsmesseinrichtung auf dem beweglichen Objekt, beispielsweise dem Tisch einer Fertigungseinrichtung, gering gehalten werden. Dadurch resultiert ein geringerer Komplexitätsgrad der entsprechenden Einrichtung.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1a, 1b     jeweils eine schematische Schnittansicht mit dem Abtaststrahlengang eines ersten Ausführungsbeispiels der erfindungsgemäßen optischen Positionsmesseinrichtung;

Figur 2a, 2b     jeweils eine Draufsicht auf die beiden verwendeten Messteilungen der Maßstäbe im ersten Ausführungsbeispiel der erfindungsgemäßen optischen Positionsmesseinrichtung;

Figur 3     eine schematische Darstellung des Abtastkopfs aus dem ersten Ausführungsbeispiel der erfindungsgemäßen optischen Positionsmesseinrichtung;

Figur 4a, 4b     jeweils eine schematische Schnittansicht mit dem Abtaststrahlengang eines zweiten Ausführungsbeispiels der erfindungsgemäßen optischen Positionsmesseinrichtung;

Figur 5a, 5b     jeweils eine Draufsicht auf die beiden verwendeten Messteilungen der Maßstäbe im zweiten Ausführungsbeispiel der erfindungsgemäßen optischen Positionsmesseinrichtung;

Figur 6a, 6b     jeweils eine schematische Schnittansicht mit dem Abtaststrahlengang eines dritten Ausführungsbeispiels der erfindungsgemäßen optischen Positionsmesseinrichtung;

Figur 7a, 7b     jeweils eine schematische Schnittansicht mit dem Abtaststrahlengang eines vierten Ausführungsbeispiels der erfindungsgemäßen optischen Positionsmesseinrichtung;

Figur 8     eine stark schematisierte Draufsicht auf eine Fertigungseinrichtung mit mehreren erfindungsgemäßen Positionsmesseinrichtungen;

Figur 9a, 9b     jeweils eine schematische Schnittansicht mit dem Teil-Abtaststrahlengang eines weiteren Ausführungsbeispiels der erfindungsgemäßen optischen Positionsmesseinrichtung.

## BESCHREIBUNG DER AUSFÜHRUNGSFORMEN

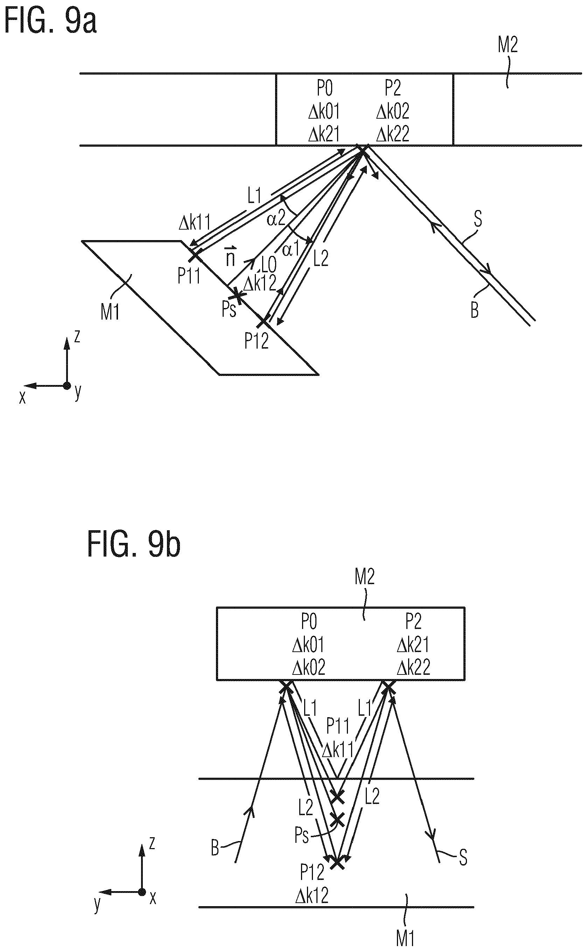

Bevor im folgenden konkrete Ausführungsbeispiele der erfindungsgemäßen optischen Positionsmesseinrichtung sowie eine Fertigungseinrichtung mit mehreren derartigen Positionsmesseinrichtungen beschrieben werden, seien zunächst anhand der Figuren 9a, 9b grundlegende theoretische Überlegungen im Zusammenhang mit der vorliegenden Erfindung erläutert.

Die beiden Figuren 9a, 9b zeigen verschiedene Schnittansichten von Teilen des Abtaststrahlengangs einer erfindungsgemäßen optischen Positionsmesseinrichtung mit zwei gekreuzt angeordneten Maßstäben M1, M2. Die Maßstäbe M1, M2 sind in unterschiedlichen Ebenen entlang mehrerer Messrichtungen x, y, z zueinander beweglich angeordnet. Die Relativposition der Maßstäbe M1, M2 wird entlang mindestens zweier verschiedener Messrichtungen x, y, z mit Hilfe der Positionsmesseinrichtung erfasst. Mit den beiden Maßstäben M1, M2 sind in der Praxis zueinander bewegliche Objekte verbunden, deren Relativposition in mehreren räumlichen Freiheitsgraden zueinander bestimmt werden soll, beispielsweise entsprechende MaschinenKomponenten; in den Figuren sind diese Objekte nicht dargestellt. Mit den von der erfindungsgemäßen Positionsmesseinrichtung erzeugten Abtastsignalen kann eine nachgeordnete Maschinensteuerung die entsprechenden Maschinenkomponenten geeignet positionieren.

Die beiden Maßstäbe M1, M2 weisen jeweils eine Messteilung bzw. Gitter mit periodisch angeordneten Gitterbereichen mit unterschiedlichen optischen Eigenschaften auf; die Messteilungen sind in den Figuren 9a, 9b aus Gründen der Übersichtlichkeit nicht dargestellt. Die Längserstreckungsrichtungen der Maßstäbe M1 und M2 sind parallel zur zweiten und ersten Messrichtung y, x orientiert, wobei durch die erste und zweite Messrichtung x, y eine horizontale Bewegungsebene aufgespannt wird. Senkrecht bzw. vertikal zur ersten und zweiten Messrichtung x, y ist die dritte Messrichtung z orientiert.

Am ersten Maßstab M2 erfolgt eine Aufspaltung eines von einer - nicht in den Figuren gezeigten - Lichtquelle emittierten Beleuchtungsstrahlenbündels B in mindestens zwei Teilstrahlenbündel. Die Teilstrahlenbündel beaufschlagen nachfolgend den zweiten Maßstab M1, welcher gegenüber der horizontalen Bewegungsebene um seine Längserstreckungsrichtung, die hier in y-Richtung orientiert ist, verkippt angeordnet ist. Dabei erfahren die Teilstrahlenbündel am zweiten Maßstab M1 eine Rückreflexion in Richtung des ersten Maßstabs M2. Die zurückreflektierten Teilstrahlenbündel treffen erneut auf dem ersten Maßstab M2 auf und werden dort wiedervereinigt, so dass anschließend ein resultierendes Signalstrahlenbündel S in Richtung einer - ebenfalls nicht dargestellten - Detektionseinheit propagiert. Über diese sind mehrere phasenverschobene Abtastsignale bezüglich der Relativbewegung der Maßstäbe M1, M2 entlang der dritten Messrichtung z sowie der ersten oder zweiten Messrichtung x, y erzeugbar

Mit Hilfe derartiger optischer Positionsmesseinrichtungen wird somit die relative Positionsänderung zwischen den beiden Maßstäben M1, M2 mit den darauf angeordneten Messteilungen gemessen. Um einen möglichst großen Verfahrbereich in der horizontalen xy-Bewegungsebene realisieren zu können, muss der erste Maßstab M2 in dieser Ebene ausgedehnt sein. Zur Gewährleistung einer achromatischen, d.h. wellenlängenunabhängigen Positionsmessung ist es erforderlich, dass die Abtaststrahlengänge der beiden Teilstrahlenbündel zwischen Aufspaltung und Wiedervereinigung die gleiche optische Weglänge aufweisen.

Wird der zweite Maßstab M1, auf den die aufgespaltenen Teilstrahlenbündel auftreffen, wie in den Figuren 9a, 9b gezeigt um seine Längserstreckungsrichtung y verkippt angeordnet, so kann die Messrichtung in der horizontalen Bewegungsebene frei gewählt werden; gleichzeitig ist eine Mess-Empfindlichkeit bezüglich Relativbewegungen entlang der vertikalen Messrichtung z sichergestellt. Das heißt, die erzeugten Abtastsignale enthalten neben Informationen zur Relativbewegung entlang einer Messrichtung x oder y in der horizontalen Bewegungsebene auch Informationen bezüglich einer Relativbewegung entlang der dritten Messrichtung z. Wenn dabei die Winkelhalbierende zwischen den beiden aufgespalteten Teilstrahlenbündeln als Normale $\vec{n}$ desweiteren senkrecht zur Maßstabsebene orientiert ist, auf die die beiden aufgespalteten Teilstrahlenbündel auftreffen, dann ist die Weglängengleichheit für die beiden Teilstrahlenbündel gewährleistet und die Abtastung achromatisch, d.h. unempfindlich gegenüber eventuellen Wellenlängenschwankungen, wie im Folgenden gezeigt wird.

Wird ein Strahlenbündel an einem optischen, diffraktiven Gitter gebeugt, so erfährt dieses eine Richtungsänderung $\Delta\vec{k}$ proportional zum Gradienten der Phase $\vec{\nabla}\Phi$ des Gitters. Dabei gibt m die Beugungsordnung des Gitters an:

$$\Delta\vec{k} = -m \bullet \vec{\nabla}\Phi$$

Verschiebt man ein erstes Lineargitter in x-Richtung um den Betrag $\Delta\vec{x}$ relativ zu einem zweiten Gitter, so ändert sich die Positionsphase $\Phi$ des Teilstrahlenbündels am ersten Gitter um:

$$\Delta\Phi = \Delta\vec{k} \bullet \Delta\vec{x}.$$

Daraus wird ersichtlich, dass bei einer Verschiebung des zweiten Gitters um den Verschiebebetrag $\Delta\vec{x}$ sich die Positionsphase $\Phi$ der Positionsmesseinrichtung um

$$\Delta\Phi = \sum_l \overrightarrow{\Delta k_{2l}} \bullet \Delta\vec{x} + \sum_l \overrightarrow{\Delta k_{1l}} \bullet \Delta\vec{x}$$

ändert. In dieser Beziehung gibt der jeweilige erste Index den ersten oder zweiten Beugungsast L1, L2 gemäß Figur 9a, 9b an; der Index I bezeichnet den Gitterkontakt des jeweiligen gebeugten Teilstrahlenbündels.

Damit folgt wiederum, dass $\Delta\Phi \neq 0$ gilt und damit eine Empfindlichkeit bezüglich einer Positionsänderung entlang der Richtung z vorliegt, falls

$$\left(\sum_l \overrightarrow{\Delta k_{2l}} + \sum_l \overrightarrow{\Delta k_{1l}}\right)_z \neq 0$$

und

$$\Delta\vec{x} = (0,0,\Delta z)$$

erfüllt ist.

Damit eine gitterbasierte Positionsmesseinrichtung eine Empfindlichkeit entlang der Richtung z aufweist, muss demzufolge mindestens eines der zur Signalerzeugung genutzten Gitter gegenüber der xy-Ebene verkippt angeordnet sein.

Unter einer achromatischen Positionsmessung versteht man grundsätzlich eine Positionsmessung, deren Messergebnis in Form der Positionsphase $\Phi$ in erster Ordnung unabhängig von der Wellenlänge $\lambda$ des Lichtes ist:

$$\frac{d\Phi}{d\lambda} = 0$$

Entscheidend für die Wellenlängenunabhängigkeit der erfindungsgemäßen Abtastungen ist daher, dass die beiden Teilstrahlenbündel zwischen Aufspaltung und Wiedervereinigung keine optische Weglängendifferenz $\Delta\Lambda$ aufweisen, wobei sich die optische Weglängendifferenz gemäß

$$\Delta\Lambda = \Lambda 2 - \Lambda 1$$

ergibt, mit $\Lambda 1 :=$ optische Weglänge des ersten Teilstrahlenbündels, $\Lambda 2 :=$ optische Weglänge des zweiten Teilstrahlenbündels

Nachfolgend wird gezeigt, dass diese Bedingung für die in den Figuren 9a, 9b gezeigte Abtastung erfüllt ist, d.h. die optischen Weglängen der beiden Teilstrahlenbündel sind dort zwischen Aufspaltung und Wiedervereinigung identisch.

So ist gemäß den Figuren 9a, 9b die Weglängendifferenz $\Delta\Lambda$ der beiden Teilstrahlenbündel zwischen Aufspaltung und Wiedervereinigung gegeben durch:

$$\Delta\Lambda = 2 \bullet (L2 - L1)$$

L1 und L2 bezeichnen hierbei die Länge der Teilstrahlenbündel zwischen dem Aufspaltpunkt P0 auf dem ersten Maßstab M2 und den Auftreffpunkten P11 bzw. P12 auf dem zweiten Maßstab M1.

Mit L0 ist in Figur 9a die Verbindungslinie der beiden Punkte P0 und Ps bezeichnet. Dabei gibt P0 den Aufspaltpunkt an und Ps den Schnittpunkt der Winkelhalbierenden der beiden Teilstrahlenbündel mit der Oberfläche des zweiten Maßstabs M1.

Damit sieht man, dass die Längen L1 und L2 der Teilstrahlenbündel gleich lang sind und damit die Weglängendifferenz $\Delta\Lambda = 0$ ist, wenn die Winkelhalbierende senkrecht auf der Verbindungslinie der beiden Auftreffpunkte P11 und P12 steht. Denn nur dann gilt:

$$L1 = L0/cos(\alpha1) = L2 = L0/cos(\alpha2) \text{ mit } \alpha1 = \alpha2$$

Mit $\alpha1$ wird hier der Winkel des ersten Beugungsasts L1 gegenüber der Winkelhalbierenden bezeichnet, mit $\alpha2$ der Winkel des zweiten Beugungsasts L2 gegenüber der Winkelhalbierenden.

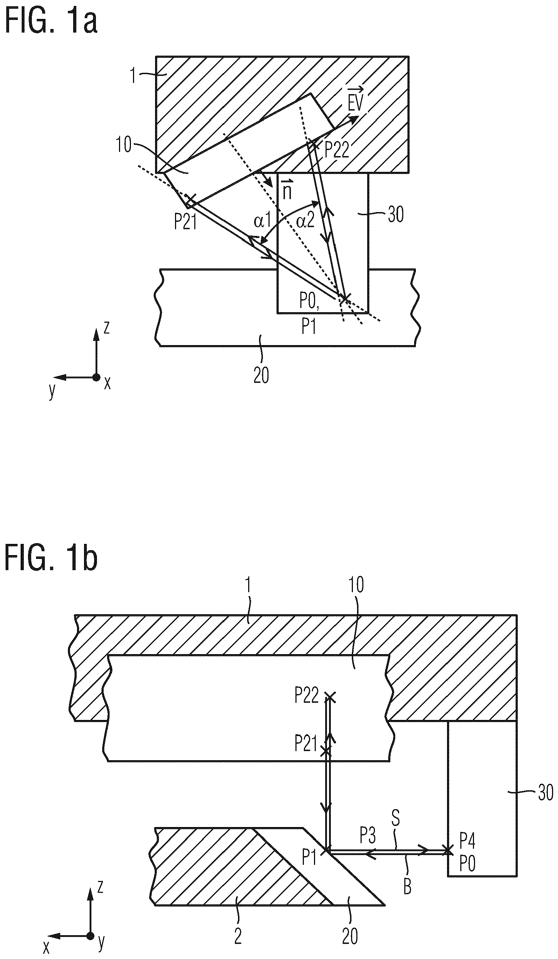

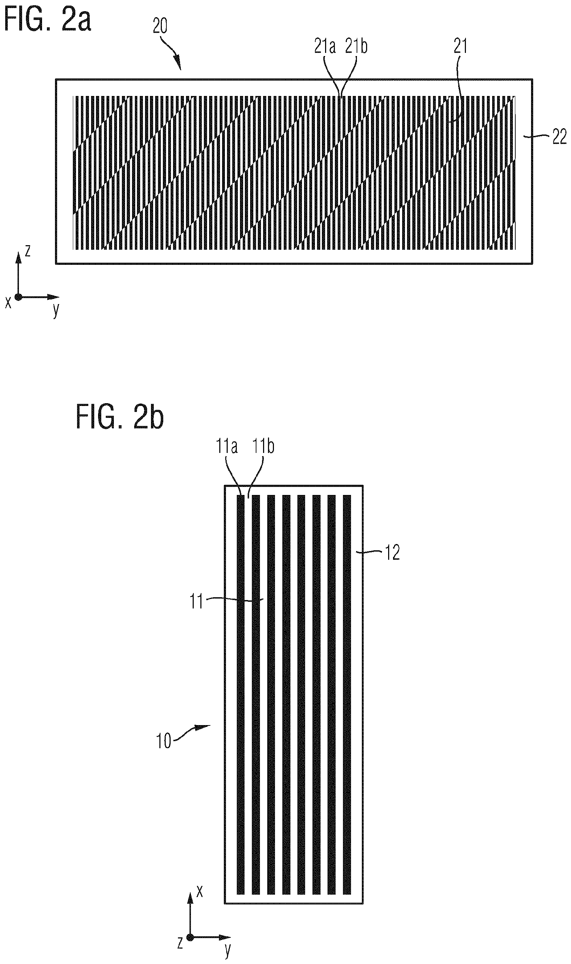

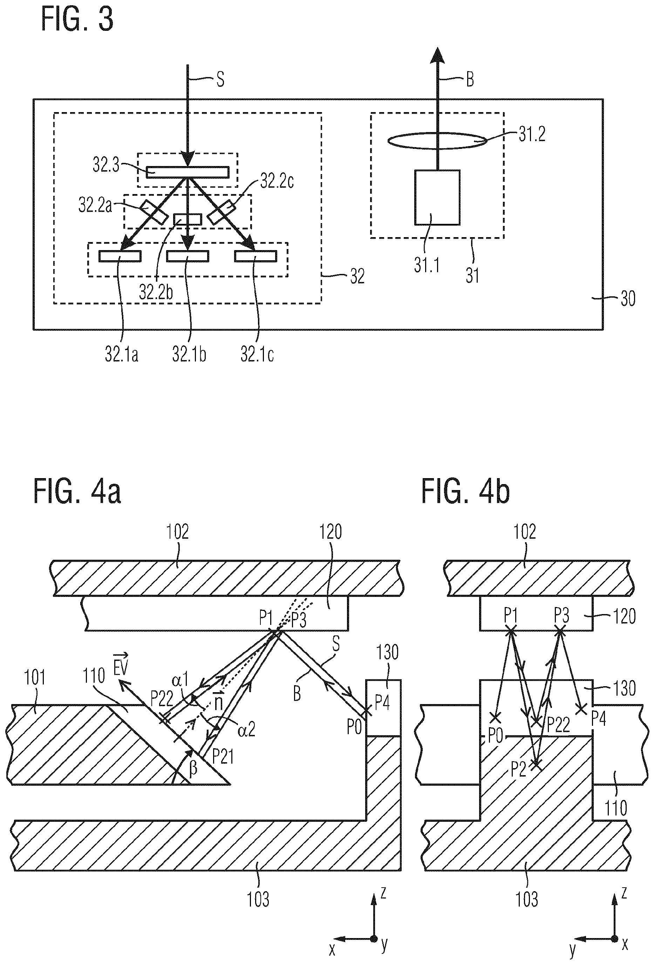

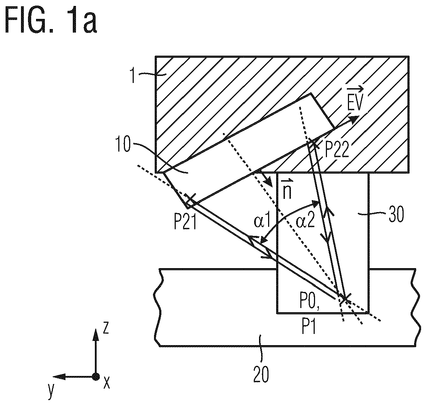

Anhand der Figuren 1a, 1b, 2a, 2b und 3 wird nachfolgend ein erstes Ausführungsbeispiel der erfindungsgemäßen optischen Positionsmesseinrichtung erläutert. Dabei zeigen die Figuren 1a, 1b verschiedene Schnittansichten mit dem Abtaststrahlengang, die Figuren 2a, 2b Draufsichten auf die Messteilungen der verwendeten Maßstäbe und Figur 3 eine Darstellung des Abtastkopfes dieser Positionsmesseinrichtung

Mit Hilfe dieses Ausführungsbeispiels der erfindungsgemäßen optischen Positionsmesseinrichtung lässt sich eine wellenlängenunabhänige Abtastung realisieren, bei der Relativbewegungen der beiden Maßstäbe 10, 20 bzw. der - schematisch angedeuteten - damit verbundenen Maschinenkomponenten 1, 2 entlang der Messrichtungen y und z messtechnisch erfassbar sind.

Im folgenden sei die in den Figuren mit x bezeichnete Richtung als erste Messrichtung bezeichnet und die hierzu orthogonale Richtung y als zweite Messrichtung. Durch die Messrichtungen x, y wird vorliegend eine horizontale Bewegungsebene aufgespannt; in dieser Bewegungsebene oder parallel hierzu ist der erste Maßstab 20 beweglich angeordnet ist. Senkrecht zur ersten und zweiten Messrichtung x, y bzw. orthogonal zur horizontalen Bewegungsebene ist eine vertikale Richtung z orientiert, die nachfolgend als dritte Messrichtung z bezeichnet sei; auch entlang dieser Richtung ist der erste Maßstab 20 beweglich angeordnet.

Es sei an dieser Stelle darauf hingewiesen, dass die in der vorliegenden Anmeldung verwendeten Bezeichnungen horizontal, vertikal, erste, zweite und dritte Messrichtung sowie oben und unten selbstverständlich in keinster Weise einschränkend zu verstehen sind.

Der erste Maßstab 20 ist im vorliegenden Ausführungsbeispiel somit beweglich entlang der drei Messrichtungen x, y, z gegenüber einem stationären Abtastkopf 30 angeordnet, der wiederum mit dem zweiten Maßstab 10 verbunden ist. Der Abtastkopf 30 umfasst u.a. eine Lichtquelle sowie eine Detektionseinheit, wobei in den Figuren 1a, 1b keine Details diesbezüglich dargestellt sind. Weitere Einzelheiten des Abtastkopfes 30 werden im weiteren Verlauf der Beschreibung anhand der Figur 3 erläutert.

Die Längserstreckungsrichtung des ersten Maßstabs 20 ist im dargestellten Beispiel parallel zur zweiten Messrichtung y orientiert, die Längserstreckungsrichtung des zweiten Maßstabs 10 parallel zur ersten Messrichtung x; die Längserstreckungsrichtungen der beiden Maßstäbe 10, 20 sind somit orthogonal zueinander orientiert.

Der erste Maßstab 20 weist eine Länge entlang seiner Längserstreckungsrichtung y auf, die dem Verschiebeweg des ersten Maßstabs 20 entlang seiner zugehörigen Messrichtung y entspricht. Der zweite Maßstab 10 weist eine Länge entlang seiner Längserstreckungsrichtung x auf, die dem Verschiebeweg des ersten Maßstabs 20 entlang der zugehörigen Messrichtung x entspricht.

Wie ferner aus Figur 1a und 1b ersichtlich, ist der zweite Maßstab 10 gegenüber der horizontalen Bewegungsebene, die durch die erste und zweite Messrichtung x, y aufgespannt wird, um seine Längserstreckungsrichtung, die hier in x-Richtung verläuft, verkippt angeordnet. Hinsichtlich der vorgesehenen Verkippung des zweiten Maßstabs 10 sei auf die weitere Beschreibung dieses Ausführungsbeispiels verwiesen.

Im vorliegenden ersten Ausführungsbeispiel ist darüber hinaus auch der erste Maßstab 20 um seine Längserstreckungsrichtung in y-Richtung gegenüber der horizontalen Bewegungsebene verkippt angeordnet; wie aus der Beschreibung weiterer Ausführungsbeispiele noch ersichtlich wird, handelt es sich hierbei jedoch um keine erfindungswesentliche Maßnahme.

Nicht in Figur 1a und Figur 1b dargestellt sind die auf den Maßstäben 10, 20 vorgesehenen Messteilungen, die jeweils aus periodisch angeordneten Gitterbereichen mit unterschiedlichen optischen Eigenschaften bestehen. Draufsichten auf die beiden Maßstäbe 20, 10 mit den entsprechenden Messteilungen 21, 11 sind in den Figuren 2a und 2b gezeigt. Als Messteilungen 21, 11 auf den Maßstäben 20, 10 sind in diesem Ausführungsbeispiel Reflexions-Phasengitter vorgesehen, die periodisch angeordnete Gitterbereiche 21a, 21b bzw. 11a, 11b mit unterschiedlichen phasenschiebenden Wirkungen aufweisen.

Die Maßstäbe 20, 10 umfassen jeweils einen Trägerkörper 22, 12, auf dem die Messteilungen 21, 11 angeordnet sind. Der Trägerkörper 22, 12 ist dabei vorzugsweise aus einem Material mit einem thermischen Ausdehnungskoeffizienten CTE ≈ 0 ausgebildet, beispielsweise aus einer Glaskeramik wie Zerodur.

Die auf dem Trägerkörper angeordneten Messteilungen 11, 21 weisen einen Mehrschicht-Aufbau auf. Dieser kann z.B. aus einer auf dem Trägerkörper 12, 22 angeordneten metallischen oder dielektrischen Spiegelschicht, einer phasenschiebenden Schicht sowie einer strukturierten, reflektierenden Schicht bestehen.

Im Fall des ersten Maßstabs 20 ist die Figur 2a gezeigte Messteilung 21 mit den Gitterbereichen 21a, 21b als sogenanntes Kreuzgitter ausgebildet. Dieses resultiert im vorliegenden Ausführungsbeispiel aus der Überlagerung zweier Lineargitter. Das erste dieser Lineargitter besitzt hierbei eine Beugungswirkung in y-Richtung, das zweite Lineargitter weist eine Beugungswirkung in y-Richtung auf, jedoch mit geringerer Intensität als das erste Lineargitter; ferner besitzt das zweite Lineargitter eine Beugungskomponente in x-Richtung. Die Darstellung in Figur 2a zeigt die binarisierte Version des aus der Überlagerung der beiden Lineargitter resultierenden Kreuzgitters.

Beim zweiten Maßstab 10 sind die Gitterbereiche 11a, 11b der Messteilung 11 gemäß der Projektionsdarstellung in die xy-Ebene in Figur 2b periodisch senkrecht zur Längserstreckungsrichtung x und damit periodisch entlang der zweiten Messrichtung y angeordnet. Die Messteilung 21 des zweiten Maßstabs 10 ist im vorliegenden Ausführungsbeispiel als sogenanntes Littrow-Gitter ausgebildet, so dass ein darauf einfallendes Strahlenbündel eine Rückreflexion entgegengesetzt zur Einfallsrichtung erfährt. Alternativ kann dabei auch vorgesehen sein, dass die in eine Ebene, die durch die am ersten Maßstab aufgespalten Teilstrahlenbündel aufgespannt wird, projizierten Teilstrahlenbündel eine Rückreflexion entgegengesetzt zur Einfallsrichtung erfahren.

Nachfolgend wird der Abtaststrahlengang des ersten Ausführungsbeispiels der erfindungsgemäßen optischen Positionsmesseinrichtung erläutert.

Das von der Lichtquelle im Abtastkopf 30 am Punkt P0 parallel zur ersten Messrichtung x emittierte Beleuchtungsstrahlenbündel B trifft am Punkt P1 auf den ersten Maßstab 20, wo über die erste Messteilung 21 eine Aufspaltung in mindestens zwei Teilstrahlenbündel bzw. Beugungsordnungen erfolgt. Eine entsprechende Aufspaltung kann an der ersten Messteilung 21 z.B. über eine Beugung in die erste Beugungsordnung, des ersten Liniengitters, mit Beugungswirkung allein in die y-Richtung erfolgen und einer Beugung in die erste Beugungsordnung, am zweiten Liniengitter, mit einer kombinierten Beugungswirkung in die y- und x-Richtung erfolgen. Die derart aufgespaltenen Teilstrahlenbündel propagieren dann unter den identischen Winkeln $\alpha 1$ bzw. $\alpha 2$ gegenüber einer Normalen $\vec{n}$ und ohne Strahlscherung in der xz-Projektion (Fig.1b) auf die Oberfläche des zweiten, verkippt angeordneten Maßstabs 10, in Richtung des zweiten Maßstabs 10. In anderen Worten ausgedrückt: In der Ebene, die durch die am ersten Maßstab 20 aufgespaltenen Teilstrahlenbündel aufgespannt wird, steht die Winkelhalbierende zwischen den aufgespaltenen Teilstrahlenbündeln senkrecht auf der Verbindungslinie zwischen den Auftreffpunkten P21, P22 der Teilstrahlenbündel am zweiten Maßstab 10. An den Auftreffpunkten P21, P22 beaufschlagen die Teilstrahlenbündel demnach den zweiten Maßstab 10 bzw. die zweite Messteilung 11. Von den Auftreffpunkten P21, P22 werden die Teilstrahlenbündel über die als Littrow-Gitter ausgebildete Messteilung 11 des zweiten Maßstabs 10 entgegengesetzt zur Einfallsrichtung zum ersten Maßstab 20 zurückreflektiert und anschließend auf dem ersten Maßstab 20 im Punkt P3 wiedervereinigt. Anschließend propagiert ein resultierendes Signalstrahlenbündel S mit den widervereinigten bzw. überlagerten Teilstrahlenbündeln antiparallel zum Beleuchtungsstrahlenbündel B in Richtung des Abtastkopfs 30 und trifft im Punkt P4 auf die dort angeordnete Detektionseinheit. Über die Detektionseinheit und die Erfassung des Signalstrahlenbündels sind mehrere phasenverschobene Abtastsignale bezüglich der Relativbewegung der Maßstäbe 10, 20 entlang der zweiten Messrichtung y und der dritten Messrichtung z erzeugbar.

In Bezug auf die Erzeugung der Abtastsignale über die Detektionseinheit sei auf die schematische Darstellung des Abtastkopfs 30 in Figur 3 verwiesen. Benachbart zu einer Beleuchtungseinheit 31 mit einer Lichtquelle 31.1 und einer vorgeordneten Kollimationsoptik 31.2 zur Erzeugung des Beleuchtungsstrahlenbündels B ist im Abtastkopf 30 die Detektionseinheit 32 angeordnet, die zur Erzeugung mehrerer phasenverschobener Abtastsignale aus dem Signalstrahlenbündel S dient. Hierzu umfasst die Detektionseinheit 32 ein Aufspaltelement 32.3, z.B. ausgebildet als Gitter, welches das einfallende Signalstrahlenbündel S in drei Teilstrahlenbündel aufspaltet, die dann jeweils in Richtung eines Polarisators 32.2a - 32.2c und dann zu einem Detektorelement 32.1a - 32.1c propagieren, das dem entsprechenden Polarisator 32.2a - 32.2c nachgeordnet ist. Mit Hilfe der Detektorelemente 32.1a - 32.1c werden die Teilstrahlenbündel in drei phasenverschobene, periodische Abtastsignale umgewandelt, beispielsweise in drei um 120° zueinander phasenversetzte Abtastsignale; die Abtastsignale können dann von einer nachgeordneten Maschinensteuerung in bekannter Art und Weise weiterverarbeitet werden.

Der erläuterte Abtaststrahlengang des ersten Ausführungsbeispiels der erfindungsgemäßen optischen Positionsmesseinrichtung liefert wie oben erwähnt Abtastsignale, die empfindlich gegenüber Relativ-Verschiebungen des zweiten Maßstabs 20 entlang der zweiten Messrichtung y sowie der dritten Messrichtung z sind. Dies ist in Figur 1a über den sogenannten Empfindlichkeitsvektor $\vec{EV}$ angedeutet; dieser gibt an, entlang welcher Messrichtung(en) eine gitterbasierte optische Positionsmesseinrichtung empfindlich bezüglich Positionsänderungen ist. Wie aus der Figur ersichtlich, besitzt der Empfindlichkeitsvektor $\vec{EV}$ hier sowohl eine Komponente in y-Richtung als auch in z-Richtung, d.h. die entsprechende Positionsmesseinrichtung ist demnach empfindlich bezüglich Positionsänderungen in diesen Messrichtungen.

Neben der gewünschten Empfindlichkeit der Positionsmessung entlang der zwei Messrichtungen y und z gewährleistet das erläuterte erste Ausführungsbeispiel der erfindungsgemäßen optischen Positionsmesseinrichtung auch die Wellenlängenunabhängigkeit der Positionsmessung. Dies wird durch ein geeignetes Verkippen des zweiten Maßstabs 10 derart sichergestellt, dass in der Ebene, die durch die am ersten Maßstab 20 aufgespaltenen Teilstrahlenbündel aufgespannt wird, die Winkelhalbierende zwischen den aufgespaltenen Teilstrahlenbündeln senkrecht auf der Verbindungslinie zwischen den Auftreffpunkten P21, P22 der Teilstrahlenbündel am zweiten Maßstab 10 steht.

In einer Variante des ersten Ausführungsbeispiels kann ferner ein Strahlteilerelement integriert im Abtastkopf 30 gemäß Figur 3 angeordnet werden. Darüber ist es möglich sicherzustellen, dass das vom ersten Maßstab 20 in Richtung des Abtastkopfs 30 propagierende Signalstrahlenbündel B an einem Punkt P4 auf die Detektionseinheit trifft, der räumlich getrennt vom Punkt P0 des emittierten Signalstrahlenbündels S ist.

Desweiteren ist es möglich, dass einer der Maßstäbe eine Messteilung aufweist, die eine polarisierende Wirkung auf darauf einfallende Strahlenbündel besitzt, so dass in den darüber gebeugten Teilstrahlenbündeln unterschiedliche Polarisationszustände resultieren. Hierzu kann eine der Messteilungen als geometrisches Phasengitter ausgebildet werden, das eine zueinander orthogonale Polarisation der davon gebeugten Teilstrahlenbündel bewirkt.

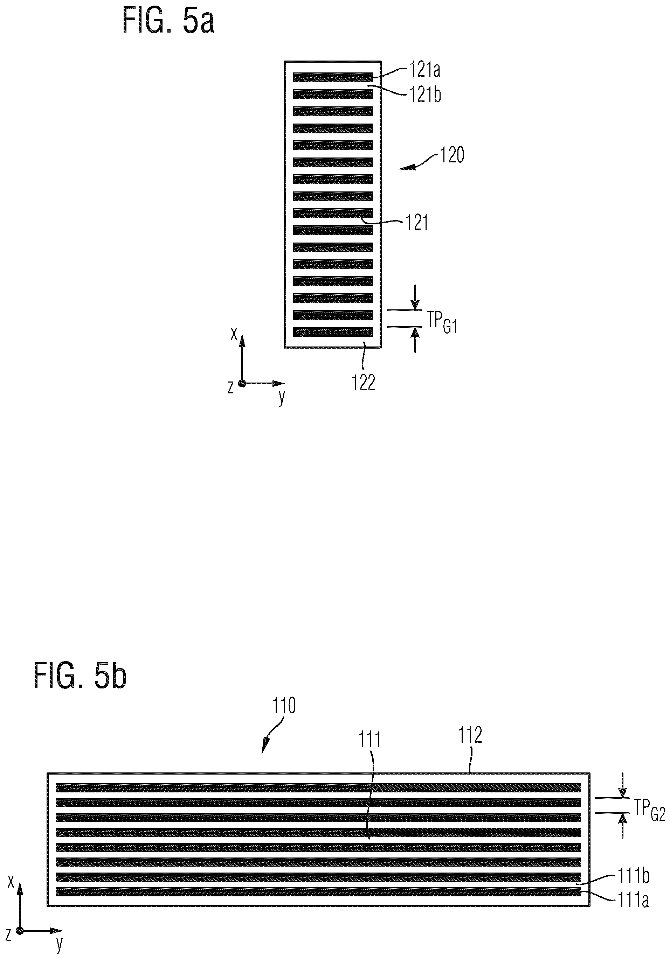

Ein zweites Ausführungsbeispiel der erfindungsgemäßen optischen Positionsmesseinrichtung wird im Folgenden anhand der Figuren 4a, 4b sowie 5a und 5b erläutert. Diese zeigen analog zum ersten Ausführungsbeispiel schematisierte Schnittansichten zur Erläuterung des Abtaststrahlengangs sowie Draufsichten auf die verwendeten Maßstäbe bzw. eine entsprechende Projektionsdarstellung in die xy-Ebene.

Mit Hilfe dieses Ausführungsbeispiels der erfindungsgemäßen optischen Positionsmesseinrichtung lässt sich eine wellenlängenunabhänige Abtastung realisieren, bei der Relativbewegungen der beiden Maßstäbe 110, 120 bzw. der - wiederum schematisch angedeuteten - damit verbundenen Maschinenkomponenten 101, 102 entlang der Messrichtungen x und z messtechnisch erfassbar sind.

In diesem Beispiel sei die in den Figuren mit x angegebene Richtung als erste Messrichtung bezeichnet und die hierzu orthogonale Richtung als Richtung y, wobei durch die Messrichtung x und die Richtung y eine horizontale Bewegungsebene aufgespannt wird. In dieser Bewegungsebene oder parallel hierzu ist vorliegend der zweite Maßstab 110 beweglich entlang der Richtung y angeordnet. Desweiteren ist der zweite Maßstab 110 auch beweglich entlang der dritten Messrichtung z angeordnet, die wiederum senkrecht zu den beiden anderen Richtungen x, y orientiert ist.

Der erste Maßstab 120 ist mit einer stationären Maschinenkomponente 102 verbunden. Im Unterschied zum vorherigen Ausführungsbeispiel ist der Abtastkopf 130 hier mit einer weiteren Maschinenkomponente 103 verbunden, die entlang der ersten Messrichtung x beweglich ist. In Bezug auf den Aufbau und die Funktion des Abtastkopfs 130 sei auf das vorherige Beispiel verwiesen.

Die Längserstreckungsrichtung des ersten Maßstabs 120 ist in diesem Ausführungsbeispiel parallel zur ersten Messrichtung x orientiert, die Längserstreckungsrichtung des zweiten Maßstabs 110 parallel zur zweiten Richtung y; die Längserstreckungsrichtungen der beiden Maßstäbe 110, 120 sind auch hier orthogonal zueinander orientiert.

Der erste Maßstab 120 weist in diesem Ausführungsbeispiel eine Länge entlang seiner Längserstreckungsrichtung x auf, die dem Verschiebeweg des zweiten Maßstabs 110 entlang seiner zugehörigen Messrichtung x entspricht. Der zweite Maßstab 110 weist eine Länge entlang seiner Längserstreckungsrichtung y auf, die dem Verschiebeweg des zweiten Maßstabs 110 entlang der zugehörigen Messrichtung y entspricht.

Wie aus Figur 4a ersichtlich, ist der zweite Maßstab 110 im Abtaststrahlengang auch in diesem Ausführungsbeispiel gegenüber dem ersten Maßstab 120 und der horizontalen Bewegungsebene, die durch die erste Messrichtung x und die Richtung y aufgespannt wird, um seine Längserstreckungsrichtung in y-Richtung verkippt angeordnet. Hinsichtlich der Verkippung des zweiten Maßstabs 110 sei auf die Erläuterungen zum vorherigen Ausführungsbeispiel verwiesen.

Eine Draufsicht auf den ersten Maßstab 120 mit den entsprechenden Messteilungen 121 ist in Figur 5a gezeigt; in Figur 5b ist analog zum vorhergehenden Beispiel eine Projektion des zweiten Maßstabs 110 mit seiner Messteilung 111 in einer Projektion in die xy-Ebene dargestellt. Als Messteilungen 121, 111 auf den Maßstäben 120, 110 sind auch in diesem Ausführungsbeispiel jeweils Reflexions-Phasengitter vorgesehen, die periodisch angeordnete Gitterbereiche 121a, 121b bzw. 111a, 111b mit unterschiedlichen phasenschiebenden Wirkungen aufweisen.

Die Maßstäbe 120, 110 umfassen wiederum jeweils einen Trägerkörper 122, 112, auf dem die Messteilungen 121, 111 angeordnet sind, die grundsätzlich wie im ersten Ausführungsbeispiel ausgebildet sein können. Der Trägerkörper 122, 112 ist auch in diesem Beispiel vorzugsweise aus einem Material mit einem thermischen Ausdehnungskoeffizienten CTE ≈ 0 ausgebildet.

Auf dem ersten Maßstab 120 sind wie aus Figur 5a ersichtlich die Gitterbereiche 121a, 121b der Messteilung 121 periodisch entlang der Längserstreckungsrichtung x dieses Maßstabs 120 angeordnet. Beim zweiten Maßstab 110 sind die Gitterbereiche 111a, 111b der Messteilung 111 gemäß Figur 5b periodisch senkrecht zur Längserstreckungsrichtung y und damit periodisch entlang der dritten Messrichtung z angeordnet.

Die Messteilung 121 des zweiten Maßstabs 120 ist auch in diesem Ausführungsbeispiel als Littrow-Gitter ausgebildet, so dass ein darauf einfallendes Strahlenbündel eine Rückreflexion entgegengesetzt zur Einfallsrichtung erfährt.

Über eine geeignete Wahl der Teilungsperiode $TP_{G2}$ der Messteilung 111 des zweiten Maßstabs 110 wird hier sichergestellt, dass bei der Beugung und Rückreflexion von darauf einfallenden Teilstrahlenbündeln die Strahlrichtungskomponente in y-Richtung unverändert bleibt. Hierzu wird die Teilungsperiode $TP_{G2}$ folgendermaßen gewählt:

$$TP_{G2} = TP_{G1} \cdot (\cos \beta) / 2$$

Dabei gibt $TP_{G1}$ die Teilungsperiode der Messteilung 121 auf dem ersten Maßstab 120 an und β gemäß Figur 4a den Winkel, um den der zweite Maßstab 110 gegenüber der Horizontalen verkippt angeordnet ist.

Nachfolgend wird der Abtaststrahlengang des zweiten Ausführungsbeispiels der erfindungsgemäßen optischen Positionsmesseinrichtung erläutert.

Das von der Lichtquelle im Abtastkopf 130 am Punkt P0 emittierte Beleuchtungsstrahlenbündel B trifft am Punkt P1 auf den ersten Maßstab 120 bzw. die darauf angeordnete Messteilung 121, wobei hier im Unterschied zum ersten Ausführungsbeispiel eine schiefe Beleuchtung des ersten Maßstabs 120 vorgesehen ist. Über die erste Messteilung 121 erfolgt analog zum ersten Ausführungsbeispiel eine Aufspaltung des Beleuchtungsstrahlenbündels B in mindestens zwei Teilstrahlenbündel bzw. Beugungsordnungen. Die aufgespalten Teilstrahlenbündel propagieren dann in der xz-Projektionsebene gemäß Figur 4a unter den identischen Winkeln α1 bzw. α2 gegenüber einer Normalen $\vec{n}$ auf die Oberfläche des zweiten, verkippt angeordneten Maßstabs 110 in Richtung des zweiten Maßstabs 110. An den Auftreffpunkten P21, P22 beaufschlagen die Teilstrahlenbündel dann den zweiten Maßstab 10 bzw. die zweite Messteilung 11. Von den Auftreffpunkten P21, P22 werden die Teilstrahlenbündel über die als Littrow-Gitter ausgebildete Messteilung 111 des zweiten Maßstabs 110 in der xz-Projektionsebene entgegengesetzt zur Einfallsrichtung in Richtung des ersten Maßstabs 120 zurückreflektiert und anschließend auf dem ersten Maßstab 120 im Punkt P3 wiedervereinigt. Anschließend propagiert ein resultierendes Signalstrahlenbündel S mit den wiedervereinigten bzw. überlagerten Teilstrahlenbündeln antiparallel zum Beleuchtungsstrahlenbündel B in Richtung des Abtastkopfs 130 und trifft im Punkt P4 auf die dort angeordnete Detektionseinheit. Über die Detektionseinheit und die Erfassung des Signalstrahlenbündels sind mehrere phasenverschobene Abtastsignale bezüglich der Relativbewegung der Maßstäbe 110, 120 entlang der ersten Messrichtung x und der dritten Messrichtung z erzeugbar.

Dies ist in Figur 4a wiederum über den Empfindlichkeitsvektor $\overrightarrow{EV}$ dieses Ausführungsbeispiels der erfindungs-gemäßen optischen Positionsmesseinrichtung angedeutet. Wie aus der Figur ersichtlich, besitzt der Empfindlichkeits-vektor $\overrightarrow{EV}$ hier sowohl eine Komponente in x-Richtung als auch in z-Richtung.

Neben der gewünschten Empfindlichkeit der Positionsmessung entlang der beiden Messrichtungen x und z gewährleistet auch dieses Ausführungsbeispiel der erfindungsgemäßen optischen Positionsmesseinrichtung die Wellenlängenunabhängigkeit der Positionsmessung. Dies wird analog zum ersten Ausführungsbeispiel wiederum durch ein geeignetes Verkippen des zweiten Maßstabs 110 im Abtaststrahlengang sichergestellt.

Aufgrund des Versatzes, den die Teilstrahlenbündel in diesem Ausführungsbeispiel senkrecht zur Messrichtung x erfahren, ist hier zudem kein Strahlteilerelement erforderlich, über das gewährleistet wird, dass das vom ersten Maßstab 120 in Richtung des Abtastkopfs 130 propagierende Signalstrahlenbündel B an einem Punkt auf die Detektionseinheit trifft, der räumlich getrennt vom Punkt des emittierten Signalstrahlenbündels S ist.

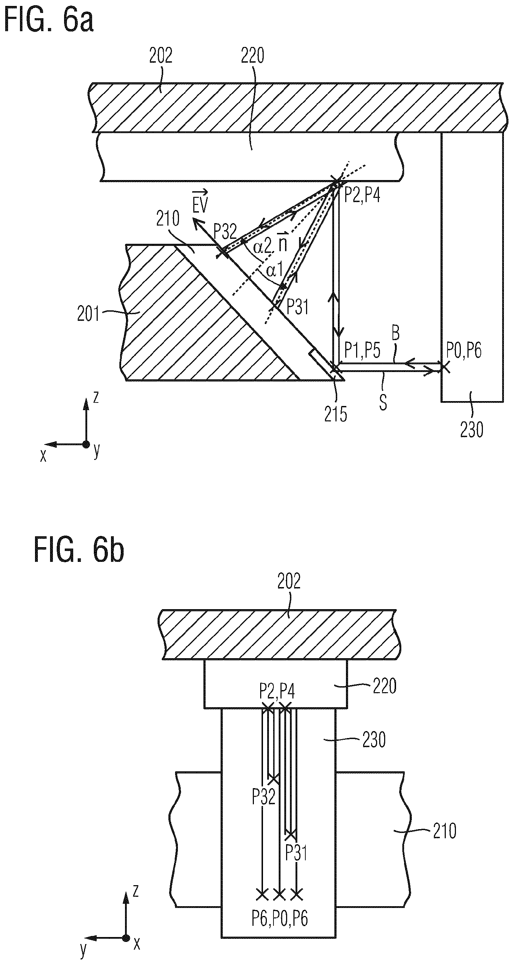

Nachfolgend wird ein drittes Ausführungsbeispiel der erfindungsgemäßen optischen Positionsmesseinrichtung anhand der Figuren 6a und 6b erläutert. Diese Figuren zeigen analog zu den beiden anderen Ausführungsbeispielen schematisierte Schnittansichten zur Erläuterung des Abtaststrahlengangs.

Auch dieses Ausführungsbeispiel der erfindungsgemäßen optischen Positionsmesseinrichtung gewährleistet eine wellenlängenunabhänige Abtastung; es werden damit Relativbewegungen der beiden Maßstäbe 210, 220 bzw. der damit verbundenen Maschinenkomponenten 201, 202 entlang der Messrichtungen x und z messtechnisch erfasst.

Die in den Figuren mit x bezeichnete Richtung sei nachfolgend als erste Messrichtung bezeichnet und die hierzu orthogonale Richtung y als zweite Messrichtung, wobei durch die Messrichtungen x, y wiederum eine horizontale Bewegungsebene aufgespannt wird. In dieser Bewegungsebene oder parallel hierzu ist vorliegend der zweite Maßstab 210 beweglich entlang der ersten und zweiten Messrichtung x, y angeordnet. Desweiteren ist der zweite Maßstab 210 auch beweglich entlang der dritten Messrichtung z angeordnet, die wiederum senkrecht zu den beiden anderen Messrichtungen x, y orientiert ist.

Der erste Maßstab 220 ist gegenüber dem zweiten Maßstab 210 mit einer stationären Maschinenkomponente 202 verbunden. Mit dem stationären ersten Maßstab 220 ist in diesem Ausführungsbeispiel auch der Abtastkopf 230 verbunden. In Bezug auf den Aufbau und die Funktion des Abtastkopfs 230 sei auf das oben erläuterte, erste Ausführungsbeispiel verwiesen.

Die Längserstreckungsrichtung des ersten Maßstabs 220 ist in diesem Ausführungsbeispiel parallel zur ersten Messrichtung x orientiert, die Längserstreckungsrichtung des zweiten Maßstabs 210 parallel zur zweiten Messrichtung y; die Längserstreckungsrichtungen der beiden Maßstäbe 210, 220 sind damit wiederum orthogonal zueinander orientiert.

Der erste Maßstab 220 weist in diesem Beispiel eine Länge entlang seiner Längserstreckungsrichtung x auf, die dem Verschiebeweg des zweiten Maßstabs 210 entlang seiner zugehörigen Messrichtung x entspricht. Der zweite Maßstab 210 weist eine Länge entlang seiner Längserstreckungsrichtung y auf, die dem Verschiebeweg des zweiten Maßstabs 210 entlang der zugehörigen Messrichtung y entspricht.

Gemäß Figur 6a, ist der zweite Maßstab 210 auch in diesem Ausführungsbeispiel gegenüber dem ersten Maßstab 220 und der horizontalen Bewegungsebene, die durch die erste und zweite Messrichtung x, y aufgespannt wird, um seine Längserstreckungsrichtung in y-Richtung verkippt angeordnet. Hinsichtlich der Verkippung des zweiten Maßstabs 210 sei auf die Beschreibung des ersten Ausführungsbeispiels verwiesen.

Die im dritten Ausführungsbeispiel verwendeten Maßstäbe 210, 220 und Messteilungen entsprechen denjenigen aus dem zweiten Ausführungsbeispiel, die in den Figuren 5a und 5b dargestellt sind und auf die hiermit ausdrücklich verwiesen wird.

Nachfolgend wird der Abtaststrahlengang des dritten Ausführungsbeispiels der erfindungsgemäßen optischen Positionsmesseinrichtung erläutert.

Das von der Lichtquelle im Abtastkopf 230 am Punkt P0 emittierte Beleuchtungsstrahlenbündel B trifft am Punkt P1 auf einen am zweiten Maßstab 210 angeordneten Reflektorbereich 215, an dem das Beleuchtungsstrahlenbündel in Richtung des ersten Maßstabs 220 umgelenkt wird. Am Punkt P2 trifft das Beleuchtungsstrahlenbündel B dann auf den ersten Maßstab 220, wo über die erste Messteilung analog zu den vorherigen Ausführungsbeispielen eine Aufspaltung in mindestens zwei Teilstrahlenbündel bzw. Beugungsordnungen erfolgt. Die aufgespaltenen Teilstrahlenbündel propagieren dann gemäß Figur 6a unter den identischen Winkeln $\alpha 1$ bzw. $\alpha 2$ gegenüber einer Normalen $\vec{n}$ auf die Oberfläche des zweiten, verkippt angeordneten Maßstabs 210 in Richtung des zweiten Maßstabs 210. An den Auftreffpunkten P31, P32 beaufschlagen die Teilstrahlenbündel dann den zweiten Maßstab 210 bzw. die zweite Messteilung. Von den Auftreffpunkten P31, P32 werden die Teilstrahlenbündel über die als Littrow-Gitter ausgebildete Messteilung des zweiten Maßstabs 210 in der xz-Projektionsebene entgegengesetzt zur Einfallsrichtung in Richtung des ersten Maßstabs 220 zurückreflektiert und anschließend auf dem ersten Maßstab 220 im Punkt P4 wiedervereinigt. Anschließend propagiert ein resultierendes Signalstrahlenbündel S mit den wiedervereinigten bzw. überlagerten Teilstrahlenbündeln antiparallel zum Beleuchtungsstrahlenbündel B über zum Reflektorbereich 215 am zweiten Maßstab 210, wo es am Punkt P5 auftrifft. Dort resultiert eine Umlenkung in Richtung des Abtastkopfs 230, wo das Signalstrahlenbündel S im Punkt P6 auf die dort angeordnete Detektionseinheit trifft. Über die Detektionseinheit und die Erfassung des Signalstrahlenbündels S sind dann mehrere phasenverschobene Abtastsignale bezüglich der Relativbewegung der Maßstäbe 210, 220 entlang der ersten Messrichtung x und der dritten Messrichtung z erzeugbar.

In Figur 6a ist der Empfindlichkeitsvektor $\overrightarrow{EV}$ angegeben, aus dem hervorgeht, entlang welcher Messrichtung dieses Ausführungsbeispiel der erfindungsgemäßen optischen Positionsmesseinrichtung empfindlich bezüglich Positionsänderungen ist. Gemäß Figur 6a besitzt der Empfindlichkeitsvektor $\overrightarrow{EV}$ hier sowohl eine Komponente in x-Richtung als auch in z-Richtung.

Neben der gewünschten Empfindlichkeit der Positionsmessung entlang der zwei Messrichtungen x und z gewährleistet auch dieses Ausführungsbeispiel der erfindungsgemäßen optischen Positionsmesseinrichtung die Wellenlängenunabhängigkeit der Positionsmessung. Dies wird analog zum ersten Ausführungsbeispiel wiederum durch ein geeignetes Verkippen des zweiten Maßstabs 210 sichergestellt.

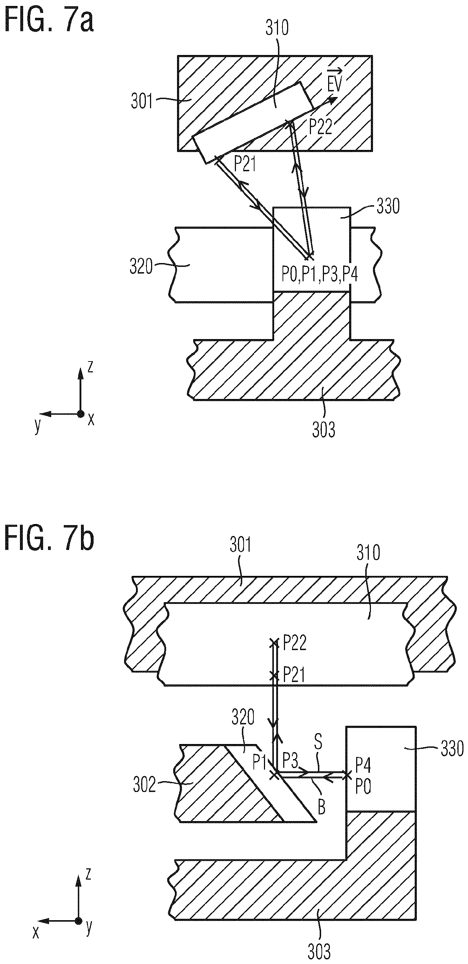

Abschließend wird ein viertes Ausführungsbeispiel der erfindungsgemäßen optischen Positionsmesseinrichtung anhand der Figuren 7a und 7b erläutert, die analog zu den anderen Ausführungsbeispielen schematisierte Schnittansichten zur Erläuterung des Abtaststrahlengangs zeigen.

Auch in diesem dieses Ausführungsbeispiel der erfindungsgemäßen optischen Positionsmesseinrichtung ist eine wellenlängenunabhänige Abtastung gewährleistet. Es werden hiermit Relativbewegungen der beiden Maßstäbe 310, 320 bzw. der damit verbundenen Maschinenkomponenten 301, 302 entlang der Messrichtungen y und z messtechnisch erfasst.

Auch hier sei die in den Figuren mit x bezeichnete Richtung nachfolgend als erste Messrichtung bezeichnet und die hierzu orthogonale Richtung y als zweite Messrichtung, wobei durch die Messrichtungen x, y wiederum eine horizontale Bewegungsebene aufgespannt wird. In dieser Bewegungsebene oder parallel hierzu ist in diesem Ausführungsbeispiel der mit einer Maschinenkomponente 303 verbundene Abtastkopf 330 beweglich entlang der ersten Messrichtung x angeordnet; hierbei ist der Abtastkopf 330 an einer entlang der Messrichtung x beweglichen Maschinenkomponente 303 angeordnet. Der Abtastkopf 330 ist in diesem Ausführungsbeispiel somit weder mit dem ersten Maßstab 320 noch mit dem zweiten Maßstab 310 verbunden. In Bezug auf den Aufbau und die Funktion des Abtastkopfs 230 sei auf das oben erläuterte, erste Ausführungsbeispiel verwiesen.

Der erste Maßstab 320 ist gegenüber dem zweiten Maßstab 310 beweglich an der Maschinenkomponente 302 angeordnet, wobei vorliegend eine Beweglichkeit des ersten Maßstabs 320 entlang der zweiten Messrichtung y vorgesehen ist. Der zweite Maßstab 310 ist mit einer stationären Maschinenkomponente 301 verbunden.

Die Längserstreckungsrichtung des ersten Maßstabs 320 ist in diesem Ausführungsbeispiel parallel zur zweiten Messrichtung y orientiert, die Längserstreckungsrichtung des zweiten Maßstabs 310 parallel zur ersten Messrichtung x; die Längserstreckungsrichtungen der beiden Maßstäbe 310, 320 sind damit wiederum orthogonal zueinander orientiert.

Der erste Maßstab 320 weist in diesem Ausführungsbeispiel eine Länge entlang seiner Längserstreckungsrichtung y auf, die dem Verschiebeweg des ersten Maßstabs 320 entlang seiner zugehörigen Messrichtung y entspricht. Der zweite Maßstab 310 weist eine Länge entlang seiner Längserstreckungsrichtung x auf, die dem Verschiebeweg des ersten Maßstabs 320 entlang der zugehörigen Messrichtung x entspricht.

Gemäß Figur 7a, ist der zweite Maßstab 310 in diesem Ausführungsbeispiel gegenüber dem ersten Maßstab 310 und der horizontalen Bewegungsebene, die durch die erste und zweite Messrichtung x, y aufgespannt wird, um seine Längserstreckungsrichtung in x-Richtung verkippt angeordnet. Hinsichtlich der Verkippung des zweiten Maßstabs 310 sei auf die Beschreibung des ersten Ausführungsbeispiels verwiesen.

Die im vierten Ausführungsbeispiel verwendeten Maßstäbe 310, 320 und Messteilungen sind identisch zum ersten erläuterten Ausführungsbeispiel ausgebildet.

Nachfolgend wird der Abtaststrahlengang des vierten Ausführungsbeispiels der erfindungsgemäßen optischen Positionsmesseinrichtung erläutert.

Das von der Lichtquelle im Abtastkopf 330 am Punkt P0 parallel zur ersten Messrichtung x emittierte Beleuchtungsstrahlenbündel B trifft am Punkt P1 auf den ersten Maßstab 320, wo über die erste Messteilung eine Aufspaltung des Beleuchtungsstrahlenbündels B in mindestens zwei Teilstrahlenbündel bzw. Beugungsordnungen erfolgt. Die aufgespaltenen Teilstrahlenbündel propagieren dann unter den identischen Winkeln $\alpha1$ bzw. $\alpha2$ gegenüber einer Normalen $\vec{n}$ auf die Oberfläche des zweiten, verkippt angeordneten Maßstabs 310 in Richtung des zweiten Maßstabs 310. An den Auftreffpunkten P21, P22 beaufschlagen die Teilstrahlenbündel dann den zweiten Maßstab 310 bzw. die darauf angeordnete zweite Messteilung. Von den Auftreffpunkten P21, P22 werden die Teilstrahlenbündel über die als Littrow-Gitter ausgebildete Messteilung des zweiten Maßstabs 310 wieder entgegengesetzt zur Einfallsrichtung in Richtung des ersten Maßstabs 320 zurückreflektiert und anschließend auf dem ersten Maßstab 320 im Punkt P3 wiedervereinigt. Anschließend propagiert ein resultierendes Signalstrahlenbündel S mit den wiedervereinigten bzw. überlagerten Teilstrahlenbündeln antiparallel zum Beleuchtungsstrahlenbündel B in Richtung des Abtastkopfs 330 und trifft im Punkt P4 auf die dort angeordnete Detektionseinheit. Über die Detektionseinheit und die Erfassung des Signalstrahlenbündels sind mehrere phasenverschobene Abtastsignale bezüglich der Relativbewegung der Maßstäbe 310, 320 entlang der zweiten Messrichtung y und der dritten Messrichtung z erzeugbar.

In Figur 7a ist ebenfalls der Empfindlichkeitsvektor $\overrightarrow{EV}$ angegeben, aus dem hervorgeht, entlang welcher Messrichtung dieses Ausführungsbeispiel der erfindungsgemäßen optischen Positionsmesseinrichtung empfindlich bezüglich Positionsänderungen ist. Gemäß Figur 7a besitzt der Empfindlichkeitsvektor $\overrightarrow{EV}$ hier sowohl eine Komponente in y-Richtung als auch in z-Richtung.

Neben der gewünschten Empfindlichkeit der Positionsmessung entlang der zwei Messrichtungen y und z gewährleistet auch dieses Ausführungsbeispiel der erfindungsgemäßen optischen Positionsmesseinrichtung die Wellenlängenunabhängigkeit der Positionsmessung. Dies wird analog zum ersten Ausführungsbeispiel wiederum durch ein geeignetes Verkippen des zweiten Maßstabs 310 gewährleistet.

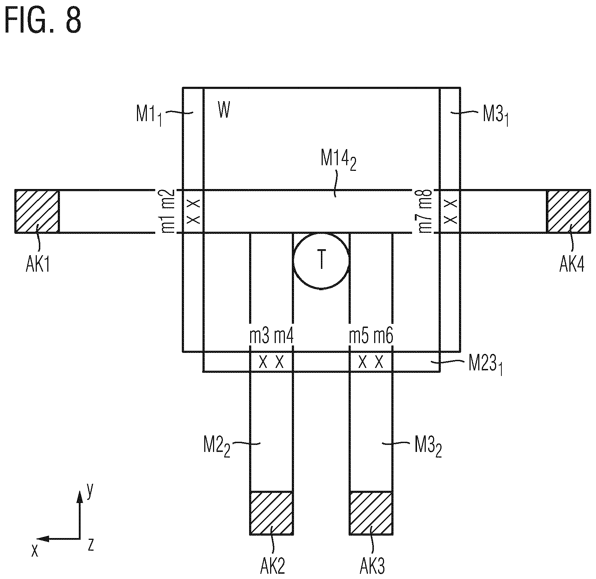

Die vorstehend erläuterten Ausführungsbeispiele erfindungsgemäßer optischer Positionsmesseinrichtungen liefern somit jeweils zum einen Verschiebungsinformationen bezüglich einer ersten Messrichtung x oder einer zweiten Messrichtung y; die beiden Messrichtungen x, y sind jeweils orthogonal zueinander in einer horizontalen Bewegungsebene orientiert. Zusätzlich hierzu ist jeweils eine Empfindlichkeit der jeweiligen Positionsmesseinrichtung für Positionsänderungen entlang einer dritten Messrichtung z vorgesehen, die senkrecht zur orthogonalen Bewegungsebene orientiert ist. Das heißt, es stehen zum anderen noch Verschiebungsinformationen in Bezug auf die dritte Messrichtung z zur Verfügung. Mit jeder der erläuterten Positionsmesseinrichtungen können somit jeweils zwei lineare räumliche Bewegungsfreiheitsgrade zweier zueinander beweglicher Objekte messtechnisch erfasst werden. Über die geeignete Kombination mehrerer erfindungsgemäßer Positionsmesseinrichtungen lassen sich darüber hinaus alle sechs möglichen Bewegungsfreiheitsgrade zweier zueinander beweglicher Objekte im Raum messtechnisch erfassen; dies sind die Translationsbewegungen entlang der Messrichtungen x, y, z sowie die Rotationsbewegungen um die Messrichtungen x, y, z. Anhand der stark schematisierten Darstellung in Figur 8 sei im Folgenden beispielhaft skizziert, wie etwa im Fall einer Fertigungseinrichtung die Relativposition eines Werkzeuges T gegenüber einem Tisch W in allen sechs räumlichen Bewegungsfreiheitsgraden mit Hilfe von vier erfindungsgemäßen Positionsmesseinrichtungen erfassbar ist. Bei der Fertigungseinrichtung kann es sich z.B. um ein Photolithographie-System handeln, bei dem ein auf dem Tisch W angeordneter Halbleiter-Wafer gegenüber dem als Belichtungsoptik ausgebildeten Werkzeug T positioniert wird.

In der dargestellten Fertigungseinrichtung sind insgesamt vier Positionsmesseinrichtungen gemäß dem oben erläuterten ersten Ausführungsbeispiel vorgesehen, die zur Erfassung der räumlichen Position des Werkzeugs T gegenüber dem Tisch W in allen sechs räumlichen Bewegungsfreiheitsgraden verwendet werden. Der Tisch W ist hierbei entlang der drei Messrichtungen x, y, z beweglich gegenüber dem Werkzeug angeordnet; hierbei stellen die Messrichtungen x, y die Hauptbewegungsrichtungen dar, entlang der Messrichtung z ist eine geringere Verschiebung möglich. Desweiteren sind noch geringe Rotationsbewegungen des Tisches um die drei Messrichtungen x, y, z möglich.

Hierbei umfasst eine erste Positionsmesseinrichtung einen Abtastkopf AK1, einen ersten Maßstab $M1_1$, der sich in y-Richtung erstreckt und einen zweiten, verkippten Maßstab $M14_2$, der sich in x-Richtung erstreckt. Der erste Maßstab $M1_1$ ist an einer ersten Seite des Tisches W angeordnet; der Abtastkopf AK1 sowie der zweite Maßstab $M14_2$ sind mit dem Werkzeug T verbunden. Mit Hilfe der ersten Positionsmesseinrichtung werden die Positionen bzw. Messgrößen m1, m2 bestimmt; es liegt hierbei eine Empfindlichkeit der entsprechenden ersten Positionsmesseinrichtung bezüglich Relativbewegungen von Werkzeug T und Tisch W entlang der Messrichtungen y und z vor.

Die zweite Positionsmesseinrichtung umfasst einen Abtastkopf AK2, einen ersten Maßstab $M23_1$, der sich in x-Richtung erstreckt und einen zweiten, verkippten Maßstab $M2_2$, der sich in y-Richtung erstreckt. Der erste Maßstab $M23_1$ ist an einer zweiten Seite des Tisches W angeordnet; der Abtastkopf AK2 sowie der zweite Maßstab $M2_2$ sind mit

dem Werkzeug T verbunden. Mit Hilfe der zweiten Positionsmesseinrichtung werden die Positionen bzw. Messgrößen m3, m4 bestimmt; es liegt hierbei eine Empfindlichkeit der entsprechenden zweiten Positionsmesseinrichtung bezüglich Relativbewegungen von Werkzeug T und Tisch W entlang der Messrichtungen x und z vor.

Die dritte Positionsmesseinrichtung umfasst einen Abtastkopf AK3, einen ersten Maßstab $M23_1$, der sich in x-Richtung erstreckt und einen verkippten, zweiten Maßstab $M3_2$, der sich in y-Richtung erstreckt. Die zweite und dritte Positionsmesseinrichtung nutzen demzufolge gemeinsam den gleichen Maßstab $M23_1$ als ersten Maßstab im Abtaststrahlengang, der an der zweiten Seite des Tisches W angeordnet ist. Der Abtastkopf AK3 sowie der zweite Maßstab $M3_2$ sind mit dem Werkzeug T verbunden. Mit Hilfe der dritten Positionsmesseinrichtung werden die Positionen bzw. Messgrößen m5, m6 bestimmt; es liegt hierbei eine Empfindlichkeit der entsprechenden dritten Positionsmesseinrichtung bezüglich Relativbewegungen von Werkzeug T und Tisch W entlang der Messrichtungen x und z vor.

Die vierte Positionsmesseinrichtung umfasst einen Abtastkopf AK4, einen ersten Maßstab $M3_1$, der sich in y-Richtung erstreckt und einen verkippten, zweiten Maßstab $M14_2$, der sich in x-Richtung erstreckt. Die erste und vierte Positionsmesseirichtung nutzen demnach gemeinsam den gleichen Maßstab $M14_2$ als verkippten zweiten Maßstab im Abtaststrahlengang. Der erste Maßstab $M3_1$ ist an einer dritten Seite des Tisches W angeordnet; der Abtastkopf AK4 sowie der zweite Maßstab $M14_2$ sind mit dem Werkzeug T verbunden. Mit Hilfe der dritten Positionsmesseinrichtung werden die Positionen bzw. Messgrößen m7, m8 bestimmt; es liegt hierbei eine Empfindlichkeit der entsprechenden vierten Positionsmesseinrichtung bezüglich Relativbewegungen von Werkzeug T und Tisch W entlang der Messrichtungen y und z vor.

Aus den gewonnenen Positionen bzw. Messgrößen m1 - m8 und der Kombination der Kombination derselbigen kann somit die räumlichen Position des Werkzeugs T gegenüber dem Tisch W in allen sechs räumlichen Bewegungsfreiheitsgraden bestimmt werden.

Besonders vorteilhaft ist hierbei u.a., dass am Tisch W lediglich an drei Seiten eine funktionale Fläche erforderlich ist, an der jeweils der erste Maßstab $M1_1$, $M23_1$, $M4_1$ der verschiedenen Positionsmesseinrichtungen angeordnet wird. Darüber hinaus sind am Tisch W keine weiteren Elemente zur Positionserfassung erforderlich.

Die anhand von Figur 8 erläuterte Anordnung mehrerer erfindungsgemäßer Positionsmesseinrichtungen in einer Fertigungseinrichtung ist selbstverständlich nur beispielhaft zu verstehen. Es gibt darüber hinaus vielfältige weitere Anordnungs- und Kombinationsmöglichkeiten der erfindungsgemäßen Positionsmesseinrichtungen untereinander bzw. mit weiteren bekannten Positionsmesseinrichtungen, die in entsprechenden Fertigungseinrichtungen und Maschinen eingesetzt werden können, um die Relativposition zueinander beweglicher Komponenten in mehreren räumlichen Freiheitsgraden messtechnisch zu erfassen.

Neben den konkret beschriebenen Ausführungsbeispielen existieren im Rahmen der vorliegenden Erfindung selbstverständlich noch weitere Ausgestaltungsmöglichkeiten für die erfindungsgemäße optische Positionsmesseinrichtung.

So ist es möglich, das Messteilungen auf den Maßstäben verwendet werden, die als Polarisationsgitter bzw. geometrisches Phasengitter ausgebildet sind, welches die beiden Teilstrahlenbündel orthogonal zueinander polarisiert. Auf diese Art und Weise können zur Erzeugung der phasenverschobenen Signale polarisationsoptische Methoden eingesetzt werden. Im Hinblick auf entsprechende Messteilungen sei auf die deutsche Patentanmeldung Nr. 10 2019 206 937.1 der Anmelderin verwiesen.

**Patentansprüche**

1. Optische Positionsmesseinrichtung, aufweisend zwei Maßstäbe, zur Erfassung der Relativposition dieser zwei, entlang mehrerer Messrichtungen (x, y, z) zueinander beweglicher Maßstäbe (M1, M2; 10, 20; 110, 120; 210, 220; 310, 320) die in unterschiedlichen Ebenen und gekreuzt zueinander angeordnet sind, wobei

   - die beiden Maßstäbe (M1, M2; 10, 20; 110, 120; 210, 220; 310, 320) jeweils eine Messteilung (11, 21; 111, 121) mit periodisch angeordneten Gitterbereichen (11a, 11b, 21a, 21b; 111a, 111b, 121a, 121b) mit unterschiedlichen optischen Eigenschaften aufweisen, und die Längserstreckungsrichtungen der Maßstäbe (M1, M2; 10, 20; 110, 120; 210, 220; 310, 320) parallel zu einer ersten und zweiten Messrichtung (x, y) orientiert sind, wobei durch die erste und zweite Messrichtung (x, y) eine horizontale Bewegungsebene aufgespannt wird, und senkrecht zur ersten und zweiten Messrichtung (x, y) eine dritte Messrichtung (z) orientiert ist, und
   - am ersten Maßstab (M2; 20; 120; 220; 320) eine Aufspaltung eines von einer Lichtquelle (31.1) emittierten Beleuchtungsstrahlenbündels (B) in mindestens zwei Teilstrahlenbündel erfolgt, und
   - die Teilstrahlenbündel nachfolgend den zweiten Maßstab (M1; 10; 110; 210; 310) beaufschlagen, welcher gegenüber der horizontalen Bewegungsebene um seine Längserstreckungsrichtung verkippt angeordnet ist, wobei die Teilstrahlenbündel am zweiten Maßstab (M1; 10; 110; 210; 310) eine Rückreflexion in Richtung des ersten Maßstabs (M2; 20; 120; 220; 320) erfahren, und

- die zurückreflektierten Teilstrahlenbündel erneut auf dem ersten Maßstab (M2; 20; 120; 220; 320) auftreffen und dort wiedervereinigt werden, so dass anschließend ein resultierendes Signalstrahlenbündel in Richtung einer Detektionseinheit (32) propagiert, über die mehrere phasenverschobene Abtastsignale bezüglich der Relativbewegung der Maßstäbe (M1, M2; 10, 20; 110, 120; 210, 220; 310, 320) entlang der dritten Messrichtung (z) sowie der ersten oder zweiten Messrichtung (x, y) erzeugbar sind.

2. Optische Positionsmesseinrichtung nach Anspruch 1, wobei der zweite Maßstab (M1; 10; 110; 210; 310) gegenüber der horizontalen Bewegungsebene um seine Längserstreckungsrichtung derart verkippt angeordnet ist, dass in der Ebene, die durch die am ersten Maßstab (M2; 20; 120; 220; 320) aufgespaltenen Teilstrahlenbündel aufgespannt wird, die Winkelhalbierende zwischen den aufgespaltenen Teilstrahlenbündeln senkrecht auf der Verbindungslinie zwischen den Auftreffpunkten der Teilstrahlenbündel am zweiten Maßstab (M1; 10; 110; 210; 310) steht.

3. Optische Positionsmesseinrichtung nach Anspruch 1 oder 2, wobei die beiden Messteilungen (11, 21; 111, 121) auf den Maßstäben (M1, M2; 10, 20; 110, 120; 210, 220; 310, 320) jeweils als Reflexions-Phasengitter ausgebildet sind, die periodisch angeordnete Gitterbereiche (11a, 11b, 21a, 21b; 111a, 111b, 121a, 121b) mit unterschiedlichen phasenschiebenden Wirkungen aufweisen.

4. Optische Positionsmesseinrichtung nach Anspruch 3, wobei die beiden Maßstäbe (M1, M2; 10, 20; 110, 120; 210, 220; 310, 320) jeweils einen Trägerkörper (12, 22) umfassen, auf dem die Messteilungen (11, 21; 111, 121) angeordnet sind und der Trägerkörper (12, 22) aus einem Material mit einem thermischen Ausdehnungskoeffizienten $CTE \approx 0$ ausgebildet ist.

5. Optische Positionsmesseinrichtung nach mindestens einem der vorangehenden Ansprüche, wobei mindestens eine der beiden Messteilungen (11, 21; 111, 121) als geometrisches Phasengitter ausgebildet ist, das die beiden Teilstrahlenbündel orthogonal zueinander polarisiert.

6. Optische Positionsmesseinrichtung nach mindestens einem der vorangehenden Ansprüche, wobei die Messteilung (11; 111) des zweiten Maßstabs (M1; 10; 110; 210; 310) als Littrow-Gitter ausgebildet ist, so dass

- entweder die darauf einfallenden Teilstrahlenbündel eine Rückreflexion entgegengesetzt zur Einfallsrichtung erfahren,
- oder die in eine Ebene, die durch eine Normale auf die zweite Messteilung und die Beugungsrichtung der ersten Messteilung aufgespannt wird, projizierten Teilstrahlenbündel eine Rückreflexion entgegengesetzt zur Einfallsrichtung erfahren.

7. Optische Positionsmesseinrichtung nach mindestens einem der vorangehenden Ansprüche, wobei die Längserstreckungsrichtungen des ersten und zweiten Maßstabs (M1, M2; 10, 20; 110, 120; 210, 220; 310, 320) orthogonal zueinander orientiert sind.

8. Optische Positionsmesseinrichtung nach mindestens einem der vorangehenden Ansprüche, wobei

- der erste Maßstab (M2; 20; 320) entlang seiner Längserstreckungsrichtung (y) eine Länge aufweist, die dem Verschiebeweg des ersten Maßstabs (M2; 20; 320) entlang seiner zugehörigen Messrichtung (y) entspricht und
- der zweite Maßstab (M1; 10; 310) entlang seiner Längserstreckungsrichtung (x) eine Länge aufweist, die dem Verschiebeweg des ersten Maßstabs (M2; 20; 320) entlang der zugehörigen Messrichtung (x) entspricht.

9. Optische Positionsmesseinrichtung nach mindestens einem der Ansprüche 1 - 7, wobei

- der erste Maßstab (120; 220) entlang seiner Längserstreckungsrichtung (x) eine Länge aufweist, die dem Verschiebeweg des zweiten Maßstabs (110; 210) entlang seiner zugehörigen Messrichtung (x) entspricht und
- der zweite Maßstab (110; 210) entlang seiner Längserstreckungsrichtung (y) eine Länge aufweist, die dem Verschiebeweg des zweiten Maßstabs (110; 210) entlang der zugehörigen Messrichtung (y) entspricht.

10. Optische Positionsmesseinrichtung nach mindestens einem der vorangehenden Ansprüche, wobei die Lichtquelle (31.1) und die Detektionseinheit (32) gemeinsam in einem Abtastkopf (30; 130; 230; 330) angeordnet sind.

11. Optische Positionsmesseinrichtung nach Anspruch 10, wobei

- der Abtastkopf (30) mit dem zweiten Maßstab (10) verbunden ist, und
- der erste Maßstab (20) entlang der ersten, zweiten und dritten Messrichtung (x, y, z) relativ beweglich gegenüber dem Abtastkopf (30) angeordnet ist, und
- der erste Maßstab (20) um seine Längserstreckungsrichtung gegenüber der horizontalen Bewegungsebene verkippt angeordnet ist.

12. Optische Positionsmesseinrichtung nach Anspruch 11, wobei das Signalstrahlenbündel (S) antiparallel zum Beleuchtungsstrahlenbündel (B) orientiert ist.

13. Optische Positionsmesseinrichtung nach Anspruch 10, wobei

- der Abtastkopf (130) weder mit dem ersten noch mit dem zweiten Maßstab (110, 120) verbunden und entlang der ersten Messrichtung (x) beweglich gegenüber dem ersten Maßstab (120) angeordnet ist, und
- der zweite Maßstab (110) entlang der zweiten und dritten Messrichtung (y, z) relativ beweglich gegenüber dem ersten Maßstab (120) angeordnet ist.

14. Optische Positionsmesseinrichtung nach Anspruch 10, wobei

- der Abtastkopf (230) mit dem ersten Maßstab (220) verbunden ist, und
- der zweite Maßstab (210) entlang der ersten, zweiten und dritten Messrichtung (x, y, z) relativ beweglich gegenüber dem Abtastkopf (230) angeordnet ist.

15. Optische Positionsmesseinrichtung nach Anspruch 10, wobei

- der Abtastkopf (330) weder mit dem ersten noch mit dem zweiten Maßstab (310, 320) verbunden und entlang der ersten Messrichtung (x) beweglich gegenüber dem zweiten Maßstab (310) angeordnet ist, und
- der erste Maßstab (320) entlang der zweiten und dritten Messrichtung (y, z) relativ beweglich gegenüber dem zweiten Maßstab (310) angeordnet ist.

16. Fertigungseinrichtung mit vier Positionsmesseinrichtungen nach Anspruch 11, wobei

- die Fertigungseinrichtung ein Werkzeug (T) sowie einen Tisch (W) umfasst, der entlang der drei Messrichtungen (x, y, z) gegenüber dem Werkzeug (T) linear verschiebbar sowie um die drei Messrichtungen (x, y, z) rotatorisch beweglich angeordnet ist, und
- die Abtastköpfe (AK1, AK2, AK3, AK4) sowie der zweite Maßstab ($M14_2$, $M2_2$, $M3_2$) der Positionsmesseinrichtungen jeweils mit dem Werkzeug (T) verbunden sind, und
- der erste Maßstab ($M1_1$, $M23_1$, $M3_1$) der Positionsmesseinrichtungen jeweils mit dem Tisch (W) verbunden ist,
- so dass aus den Abtastsignalen der Positionsmesseinrichtungen die räumliche Position des Tisches (W) gegenüber dem Werkzeug (T) in allen sechs räumlichen Freiheitsgraden bestimmbar ist.

**Claims**

1. Optical position measuring device, having two scales, for detecting the relative position of these two scales (M1, M2; 10, 20; 110, 120; 210, 220; 310, 320), which can be moved relative to one another along a plurality of measuring directions (x, y, z) and which are arranged in different planes and are crossed relative to each other, wherein

- the two scales (M1, M2; 10, 20; 110, 120; 210, 220; 310, 320) each have a measuring graduation (11, 21; 111, 121) with periodically arranged grating regions (11a, 11b, 21a, 21b; 111a, 111b, 121a, 121b) with different optical properties, and the directions of longitudinal extent of the scales (M1, M2; 10, 20; 110, 120; 210, 220; 310, 320) are oriented parallel to a first and second measuring direction (x, y), wherein a horizontal movement plane is spanned by the first and second measuring direction (x, y) and a third measuring direction (z) is oriented at right angles to the first and second measuring direction (x, y), and
- on the first scale (M2; 20; 120; 220; 320), an illumination beam (B) emitted by a light source (31.1) is split into at least two partial beams, and
- the partial beams subsequently strike the second scale (M1; 10; 110; 210; 310), which is arranged to be tilted with respect to the horizontal movement plane about the direction of its longitudinal extent, wherein the partial beams experience back-reflection on the second scale (M1; 10; 110; 210; 310) in the direction of the first scale (M2; 20; 120; 220; 320), and

- the back-reflected partial beams strike the first scale (M2; 20; 120; 220; 320) again and are recombined there, so that a resultant signal beam is then propagated in the direction of a detection unit (32), via which a plurality of phase-shifted scanning signals with respect to the relative movement of the scales (M1, M2; 10, 20; 110, 120; 210, 220; 310, 320) along the third measuring direction (z) and the first or second measuring direction (x, y) can be generated.

2. Optical position measuring device according to Claim 1, wherein the second scale (M1; 10; 110; 210; 310) is arranged to be tilted with respect to the horizontal movement plane about the direction of its longitudinal extent in such a way that in the plane which is spanned by the partial beam split on the first scale (M2; 20; 120; 220; 320), the bisector between the split partial beams is perpendicular to the connecting line between the points of impingement of the partial beams on the second scale (M1; 10; 110; 210; 310).

3. Optical position measuring device according to Claim 1 or 2, wherein the two measuring graduations (11, 21; 111, 121) on the scales (M1, M2; 10, 20; 110, 120; 210, 220; 310, 320) are each formed as reflection phase gratings, which have periodically arranged grating regions (11a, 11b, 21a, 21b; 111a, 111b, 121a, 121b) with different phase-shifting effects.

4. Optical position measuring device according to Claim 3, wherein the two scales (M1, M2; 10, 20; 110, 120; 210, 220; 310, 320) each comprise a supporting body (12, 22), on which the measuring graduations (11, 21; 111, 121) are arranged, and the supporting body (12, 22) is formed from a material with a coefficient of thermal expansion $CTE \approx 0$.

5. Optical position measuring device according to at least one of the preceding claims, wherein at least one of the two measuring graduations (11, 21; 111, 121) is formed as a geometric phase grating, which polarizes the two partial beams orthogonally relative to each other.

6. Optical position measuring device according to at least one of the preceding claims, wherein the measuring graduation (11; 111) of the second scale (M1; 10; 110; 210; 310) is formed as a Littrow grating, so that

   - either the partial beams incident thereon experience back-reflection counter to the direction of incidence,
   - or the partial beams projected into a plane which is spanned by a normal to the second measuring graduation and the refraction direction of the first measuring graduation experience back-reflection counter to the direction of incidence.

7. Optical position measuring device according to at least one of the preceding claims, wherein the directions of longitudinal extent of the first and second scale (M1, M2; 10, 20; 110, 120; 210, 220; 310, 320) are oriented orthogonally relative to each other.

8. Optical position measuring device according to at least one of the preceding claims, wherein

   - the first scale (M2; 20; 320) has a length along its direction of longitudinal extent (y) which corresponds to the displacement travel of the first scale (M2; 20; 320) along its associated measuring direction (y), and
   - the second scale (M1; 10; 310) has a length along its direction of longitudinal extent (x) which corresponds to the displacement travel of the first scale (M2; 20; 320) along the associated measuring direction (x).

9. Optical position measuring device according to at least one of Claims 1 - 7, wherein

   - the first scale (120; 220) has a length along its direction of longitudinal extent (x) which corresponds to the displacement travel of the second scale (110; 210) along its associated measuring direction (x), and
   - the second scale (110; 210) has a length along its direction of longitudinal extent (y) which corresponds to the displacement travel of the second scale (110; 210) along the associated measuring direction (y).

10. Optical position measuring device according to at least one of the preceding claims, wherein the light source (31.1) and the detection unit (32) are jointly arranged in a scanning head (30; 130; 230; 330).

11. Optical position measuring device according to Claim 10, wherein

- the scanning head (30) is connected to the second scale (10) , and
- the first scale (20) is arranged to be relatively movable with respect to the scanning head (30) along the first, second and third measuring direction (x, y, z), and
- the first scale (20) is arranged to be tilted with respect to the horizontal movement plane about its direction of longitudinal extent.

12. Optical position measuring device according to Claim 11, wherein the signal beam (S) is oriented anti-parallel to the illumination beam (B).

13. Optical position measuring device according to Claim 10, wherein

- the scanning head (130) is connected neither to the first nor to the second scale (110, 120) and is arranged to be movable with respect to the first scale (120) along the first measuring direction (x), and
- the second scale (110) is arranged to be relatively movable with respect to the first scale (120) along the second and third measuring direction (y, z).

14. Optical position measuring device according to Claim 10, wherein

- the scanning head (230) is connected to the first scale (220), and
- the second scale (210) is arranged to be relatively movable with respect to the scanning head (230) along the first, second and third measuring direction (x, y, z).

15. Optical position measuring device according to Claim 10, wherein

- the scanning head (330) is connected neither to the first nor to the second scale (310, 320) and is arranged to be movable with respect to the second scale (310) along the first measuring direction (x), and
- the first scale (320) is arranged to be relatively movable with respect to the second scale (310) along the second and third measuring direction (y, z).

16. Manufacturing device having four position measuring devices according to Claim 11, wherein

- the manufacturing device comprises a tool (T) and a table (W), which is arranged to be linearly displaceable with respect to the tool (T) along the three measuring directions (x, y, z) and rotationally movable about the three measuring directions (x, y, z), and
- the scanning heads (AK1, AK2, AK3, AK4) and the second scale ($M14_2$, $M2_2$, $M3_2$) of the position measuring devices are each connected to the tool (T), and
- the first scale ($M1_1$, $M23_1$, $M3_1$) of the position measuring devices is in each case connected to the table (W) ,
- so that the spatial position of the table (W) with respect to the tool (T) in all six spatial degrees of freedom can be determined from the scanning signals of the position measuring devices.

## Revendications

1. Dispositif de mesure de position optique, comportant deux échelles, ledit dispositif étant destiné à détecter la position relative de ces deux échelles (M1, M2 ; 10, 20 ; 110, 120 ; 210, 220 ; 310, 320) qui sont mobiles l'une par rapport à l'autre suivant une pluralité de directions de mesure (x, y, z) et qui sont disposées à différents niveaux et de manière à se croiser,

- les deux échelles (M1, M2 ; 10, 20 ; 110, 120 ; 210, 220 ; 310, 320) comportant chacune une graduation de mesure (11, 21 ; 111, 121) pourvue des zones de réseau (11a, 11b, 21a, 21b ; 111a, 111b, 121a, 121b) qui sont disposées périodiquement et dont les propriétés optiques sont différentes, et les directions d'extension longitudinale des échelles (M1, M2 ; 10, 20 ; 110, 120 ; 210, 220 ; 310, 320) étant orientées parallèlement à une première et une deuxième direction de mesure (x, y), un plan de mouvement horizontal passant par la première et la deuxième direction de mesure (x, y), et une troisième direction de mesure (z) étant orientée perpendiculairement à la première et à la deuxième direction de mesure (x, y), et
- une division d'un faisceau d'éclairage (B), émis par une source de lumière (31.1), en au moins deux faisceaux partiels étant effectuée au niveau de la première échelle (M2 ; 20 ; 120 ; 220 ; 320) et
- les faisceaux partiels agissant ensuite sur la deuxième échelle (M1 ; 10 ; 110 ; 210 ; 310) qui est disposée de manière inclinée autour de sa direction d'extension longitudinale par rapport au plan de déplacement horizontal, les faisceaux partiels subissant au niveau de la deuxième échelle (M1 ; 10 ; 110 ; 210 ; 310) une rétro-réflexion en direction de la première échelle (M2 ; 20 ; 120 ; 220 ; 320), et

- les faisceaux partiels rétro-réfléchis étant à nouveau incidents à la première échelle (M2 ; 20 ; 120 ; 220 ; 320) où ils se recombinent de sorte qu'un faisceau de signal résultant se propage ensuite en direction d'une unité de détection (32) qui permet de générer une pluralité de signaux de balayage déphasés par rapport au mouvement relatif des échelles (M1, M2 ; 10, 20 ; 110, 120 ; 210, 220 ; 310, 320) suivant la troisième direction de mesure (z) et la première ou deuxième direction de mesure (x, y).

2. Dispositif de mesure de position optique selon la revendication 1, la deuxième échelle (M1 ; 10 ; 110 ; 210 ; 310) étant disposée de manière inclinée autour de sa direction longitudinale par rapport au plan de déplacement horizontal de manière que, dans le plan qui passe par les faisceaux partiels divisés au niveau de la première échelle (M2 ; 20 ; 120 ; 220 ; 320), la bissectrice entre les faisceaux partiels divisés soit perpendiculaire à la ligne de liaison entre les points d'incidence des faisceaux partiels sur la deuxième échelle (M1 ; 10 ; 110 ; 210 ; 310).

3. Dispositif de mesure de position optique selon la revendication 1 ou 2, les deux graduations de mesure (11, 21 ; 111, 121) sur les échelles (M1, M2 ; 10, 20 ; 110, 120 ; 210, 220 ; 310, 320) étant conçues chacune comme des réseaux de phase de réflexion qui comportent des zones de réseau (11a, 11b, 21a, 21b ; 111a, 111b, 121a, 121b) qui sont disposées périodiquement et dont les déphasages résultants sont différents.

4. Dispositif de mesure de position optique selon la revendication 3, les deux échelles (M1, M2 ; 10, 20 ; 110, 120 ; 210, 220 ; 310, 320) comportant chacune un corps de support (12, 22) sur lequel les graduations de mesure (11, 21 ; 111, 121) sont disposées et le corps de support (12, 22) étant formé à partir d'un matériau dont le coefficient de dilatation thermique CTE ≈ 0.

5. Dispositif de mesure de position optique selon l'une au moins des revendications précédentes, au moins une des deux graduations de mesure (11, 21 ; 111, 121) étant conçue comme un réseau de phase géométrique qui polarise les deux faisceaux partiels orthogonalement l'un à l'autre.

6. Dispositif de mesure de position optique selon l'une au moins des revendications précédentes, la graduation de mesure (11 ; 111) de la deuxième échelle (M1 ; 10 ; 110 ; 210 ; 310) étant conçue comme un réseau de Littrow de sorte que

- soit les faisceaux partiels incidents subissent une rétro-réflexion dans la direction opposée à la direction d'incidence,
- soit, dans un plan passant par une normale à la deuxième graduation de mesure et la direction de diffraction de la première graduation de mesure, des faisceaux partiels projetés subissent une rétro-réflexion dans la direction opposée à la direction d'incidence.

7. Dispositif de mesure de position optique selon l'une au moins des revendications précédentes, les directions d'extension longitudinale des première et deuxième échelles (M1, M2 ; 10, 20 ; 110, 120 ; 210, 220 ; 310, 320) étant orientées orthogonalement l'une à l'autre.

8. Dispositif de mesure de position optique selon l'une au moins des revendications précédentes,

- la première échelle (M2 ; 20 ; 320) ayant suivant sa direction longitudinale (y) une longueur qui correspond au chemin de déplacement de la première échelle (M2 ; 20 ; 320) suivant sa direction de mesure associée (y) et
- la deuxième échelle (M1 ; 10 ; 310) ayant suivant sa direction longitudinale (x) une longueur qui correspond au chemin de déplacement de la première échelle (M2 ; 20 ; 320) suivant la direction de mesure associée (x).

9. Dispositif de mesure de position optique selon l'une au moins des revendications 1 à 7,

- la première échelle (120 ; 220) ayant suivant sa direction longitudinale (x) une longueur qui correspond au chemin de déplacement de la deuxième échelle (110 ; 210) suivant sa direction de mesure associée (x) et
- la deuxième échelle (110 ; 210) ayant suivant sa direction longitudinale (y) une longueur qui correspond au chemin de déplacement de la deuxième échelle (110 ; 210) suivant la direction de mesure associée (y).

10. Dispositif de mesure de position optique selon l'une au moins des revendications précédentes, la source de lumière (31.1) et l'unité de détection (32) étant disposées conjointement dans une tête de balayage (30 ; 130 ; 230 ; 330).

**11.** Dispositif de mesure de position optique selon la revendication 10,

   - la tête de balayage (30) étant reliée à la deuxième échelle (10), et
   - la première échelle (20) étant disposée de manière à être mobile par rapport à la tête de balayage (30) suivant des première, deuxième et troisième directions de mesure (x, y, z), et
   - la première échelle (20) étant disposée de manière inclinée autour de sa direction d'extension longitudinale par rapport au plan de déplacement horizontal.

**12.** Dispositif de mesure de position optique selon la revendication 11, le faisceau de signal (S) étant orienté antiparallèlement au faisceau d'éclairage (B).

**13.** Dispositif de mesure de position optique selon la revendication 10,

   - la tête de balayage (130) n'étant reliée ni à la première ni à la deuxième échelle (110, 120) et étant disposée de manière à être mobile par rapport à la première échelle (120) suivant la première direction de mesure (x), et
   - la deuxième échelle (110) étant disposée de manière à être mobile par rapport à la première échelle (120) suivant la deuxième et la troisième direction de mesure (y, z).

**14.** Dispositif de mesure de position optique selon la revendication 10,

   - la tête de balayage (230) étant reliée à la première échelle (220), et
   - la deuxième échelle (210) étant disposée de manière à être mobile par rapport à la tête de balayage (230) suivant la première, la deuxième et la troisième direction de mesure (x, y, z).

**15.** Dispositif de mesure de position optique selon la revendication 10,

   - la tête de balayage (330) n'étant reliée ni à la première ni à la deuxième échelle (310, 320) et étant disposée de manière à être mobile par rapport à la deuxième échelle (310) suivant la première direction de mesure (x), et
   - la première échelle (320) étant disposée de manière à être mobile par rapport à la deuxième échelle (310) suivant la deuxième et la troisième direction de mesure (y, z).

**16.** Dispositif de fabrication comprenant quatre dispositifs de mesure de position selon la revendication 11,

   - le dispositif de fabrication comprenant un outil (T) et une table (W) qui peut être déplacée linéairement par rapport à l'outil (T) suivant les trois directions de mesure (x, y, z) et qui est disposée de manière à être mobile en rotation autour des trois directions de mesure (x, y, z), et
   - les têtes de balayage (AK1, AK2, AK3, AK4) et la deuxième échelle ($M14_2$, $M2_2$, $M3_2$) des dispositifs de mesure de position étant chacune reliées à l'outil (T), et
   - la première échelle ($M1_1$, $M23_1$, $M3_1$) de chacun des dispositifs de mesure de position étant reliée à la table (W),
   - de sorte que la position spatiale de la table (W) par rapport à l'outil (T) puisse être déterminée dans les six degrés de liberté spatiaux à partir des signaux de balayage des dispositifs de mesure de position.

## FIG. 1a

## FIG. 1b

## FIG. 2a

## FIG. 2b

FIG. 3

FIG. 4a

FIG. 4b

# FIG. 5a

121a
121b

120

121

TP$_{G1}$

122

# FIG. 5b

110

111          112

TP$_{G2}$

111b
111a

## FIG. 6a

## FIG. 6b

FIG. 7a

FIG. 7b

FIG. 8

## FIG. 9a

## FIG. 9b

# FIG. 1a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008138501 A1
- EP 1019669 B1
- EP 1762828 A2
- EP 2450673 A2
- DE 102016210434 A1
- DE 102015203188 A1
- DE 102017219125 A1
- DE 102019206937